# EUROPEAN PATENT APPLICATION

(11) **EP 4 726 499 A1**
(43) Date of publication of application: **15.04.2026**
(21) Application number: 25723580.4
(22) Date of filing: 07.05.2025
(51) Int. Cl.: G06F 1/16, C09J 9/00

(54) **FLEXIBLE DISPLAY AND ELECTRONIC APPARATUS INCLUDING SAME**

(30) Priority: 19.08.2024 KR 20240110695; 25.09.2024 KR 20240129813
(71) Applicant: SAMSUNG ELECTRONICS CO., LTD., Yeongtong-gu Suwon-si, Gyeonggi-do 16677 (KR)
(72) Inventor: KIM, Youngsuk, Suwon-si Gyeonggi-do 16677 (KR); AN, Jungchul, Suwon-si Gyeonggi-do 16677 (KR); KIM, Chanyoung, Suwon-si Gyeonggi-do 16677 (KR); LEE, Jaehoon, Suwon-si Gyeonggi-do 16677 (KR)
(74) Representative: HGF
(86) International application number: PCT/KR2025/006095
(87) International publication number: WO 2026/043004

(57) **Abstract**

According to an embodiment of the disclosure, a foldable electronic device may include a foldable housing including a first housing, a second housing, and a hinge rotatably coupling the first housing to the second housing, a flexible display including a first area supported by the first housing, a second area supported by the second housing, and a folding area connected to the first area and the second area, wherein the folding area of the flexible display is configured to be at least partially folded or unfolded based on a rotation of the second housing with respect to the first housing, a first adhesive portion including an adhesive material, adhered to a first surface of the first housing and the first area, and disposed substantially parallel to a folding axis defined by the hinge, and a second adhesive portion including an adhesive material, adhered to the first surface of the first housing and the first area, and disposed substantially parallel to the first adhesive portion. Various other embodiments may be possible.

## Description

### [Technical Field]

Various embodiments disclosed herein relate to electronic devices, for example, to a flexible display and an electronic device including the same.

### [Background Art]

The term "electronic device" may refer to a device that performs a specific function based on an installed program, such as a home appliance, an electronic scheduler, a portable multimedia player, a mobile communication terminal, a tablet PC, a video/audio device, a desktop/laptop PC, or a vehicle navigation system. For example, these electronic devices may output stored information as sound or images. As the degree of integration of electronic devices increases and ultra-high-speed and high-capacity wireless communication become more widespread, a single electronic device, such as a mobile communication terminal, may be equipped with various functions. For example, not only communication functions but also entertainment functions such as gaming, multimedia functions such as music and video playback, communication and security functions for mobile banking, or functions of schedule management or electronic wallet are being integrated into a single electronic device.

As the use of personal or portable communication devices, such as smartphones, has become common, user demands for portability and ease of use are increasing. For example, a touch screen display may provide a virtual keypad that replaces a mechanical input device (e.g., a button input device) while serving as an output device that outputs a screen (e.g., visual information). Accordingly, portable communication devices or electronic devices have come to be capable of providing the same or further improved usability (e.g., a larger screen) while being miniaturized. On the other hand, with the commercialization of flexible, for example, foldable or rollable displays, it is expected that the portability and ease of use of electronic devices will be further improved. An electronic device including a flexible display may be carried in a state in which multiple different structures (e.g., housings) are folded or rolled and may provide a large screen in an unfolded state, thereby improving portability and convenience of use.

The above-described information may be provided as related art for the purpose of helping to understand the disclosure. No claim or determination is made as to whether any of the foregoing may be applied as prior art with respect to the disclosure.

### [Detailed Description of the Invention]

### [Technical Solution]

According to an embodiment of the disclosure, foldable electronic device may include a foldable housing including a first housing, a second housing, and a hinge rotatably coupled to the first housing and the second housing, a flexible display including a first area supported by the first housing, a second area supported by the second housing, and a folding area rotatably coupled to the first area and the second area, the folding area of the flexible display being configured to be at least partially folded or unfolded based on a rotation of the second housing with respect to the first housing, a first adhesive portion including an adhesive material, adhered to a first surface of the first housing and the first area, and disposed substantially parallel to a folding axis defined by the hinge, and a second adhesive portion including an adhesive material, adhered to the first surface of the first housing and the first area, and disposed substantially parallel to the first adhesive portion.

According to an embodiment of the disclosure, a foldable electronic device may include a foldable housing including a first housing and a second housing rotatably connected to the first housing, a hinge connected to the first housing and the second housing and providing a folding axis, a flexible display including a first area disposed on a first surface of the first housing, a second area disposed on a third surface of the second housing, and a folding area disposed between the first area and the second area, a first adhesive portion including an adhesive material and adhered to the first surface of the first housing and the first area, and a second adhesive portion including an adhesive material, adhered to the first surface of the first housing and the first area, and disposed adjacent to the first adhesive portion.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to various embodiments in a network environment.
FIG. 2 is a view illustrating an electronic device according to an embodiment of the disclosure in an unfolded state.
FIG. 3 is a view illustrating the electronic device according to an embodiment of the disclosure in a folded state.
FIG. 4 is an exploded perspective view of an electronic device according to an embodiment of the disclosure.
FIG. 5 is a cross-sectional view of an electronic device according to an embodiment of the disclosure, taken along line A-A' in FIG. 3.
FIG. 6A is a plan view of an electronic device according to an embodiment of the disclosure.
FIG. 6B is an enlarged view of a portion of the electronic device of FIG. 6A according to an embodiment of the disclosure.
FIGS. 7A, 7B, and 7C are cross-sectional views taken along line B-B' of FIG. 6A according to an embodiment of the disclosure.
FIGS. 8A, 8B, and 8C are cross-sectional views taken along line C-C' of FIG. 6A, according to an embodiment of the disclosure.
FIG. 9 is a cross-sectional view of the electronic device taken along line D-D' of FIG. 3, according to an embodiment of the disclosure.
FIG. 10 is an enlarged view of portion E of FIG. 9 according to an embodiment of the disclosure.
FIG. 11 is a plan view of an electronic device according to an embodiment of the disclosure.
FIG. 12 is a cross-sectional view taken along line F-F' of FIG. 11, according to an embodiment of the disclosure.
FIG. 13 is a plan view of an electronic device according to an embodiment of the disclosure.
FIG. 14 is a plan view of an electronic device according to an embodiment of the disclosure.
FIG. 15 is a side view of the electronic device according to an embodiment of the disclosure.
FIG. 16 is a plan view illustrating the interior of a foldable electronic device according to an embodiment of the disclosure.

Throughout the appended drawings, like reference numerals may be assigned to like components, configurations, and/or structures.

### [Mode for Carrying out the Invention]

Hereinafter, embodiments of the disclosure will be described in detail with reference to the drawings such that a person ordinarily skilled in the art to which the disclosure belongs can easily carry out the disclosure. However, the disclosure may be implemented in many different forms, and is not limited to the embodiments described herein. In connection with a description made with reference to the drawings, the same or similar reference numerals may be used for the same or similar elements. In addition, in the drawings and related descriptions, descriptions of well-known functions and configurations may be omitted for clarity and brevity.

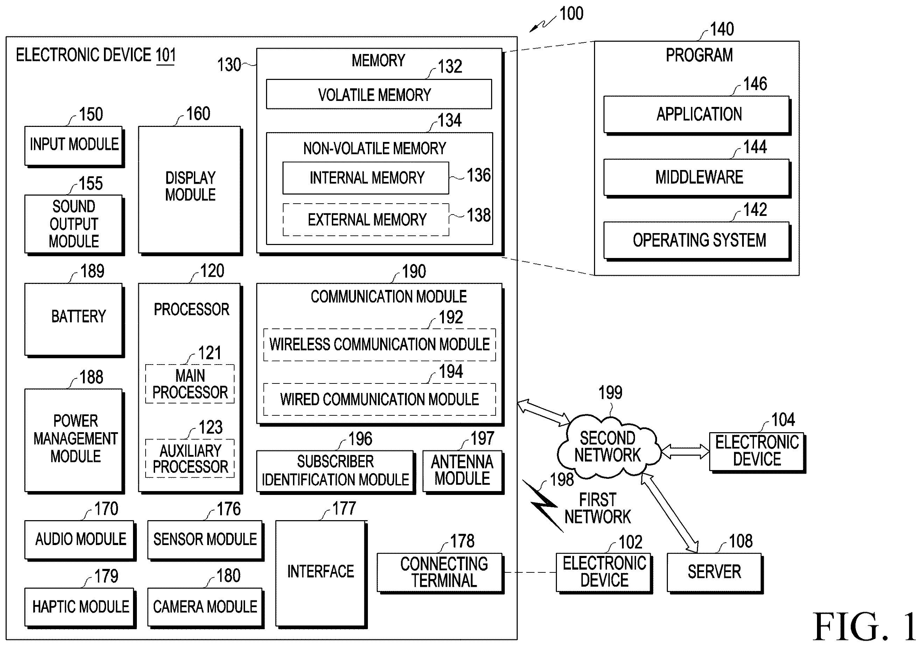

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, the length direction, the width direction, and/or the thickness direction of an electronic device may be referred to, wherein the length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front surface of an electronic device and/or a housing may be defined as a "side oriented in the +Z direction," and the rear surface may be defined as a "side oriented in the -Z direction." In an embodiment, a lateral side of an electronic device and/or a housing may include an area oriented in the +X direction, an area oriented in the +Y direction, an area oriented in the -X direction, and/or an area oriented in the -Y direction. In an embodiment, the "X-axis direction" may include both the "-X direction" and the "+X direction." It is noted that these are based on the Cartesian coordinate system illustrated in the drawings for the sake of brevity of description, and the descriptions of these directions or components do not limit the embodiments of the disclosure. For example, depending on the design specifications of an electronic device or a user's usage habits, the Cartesian coordinate system may be defined differently from the disclosure.

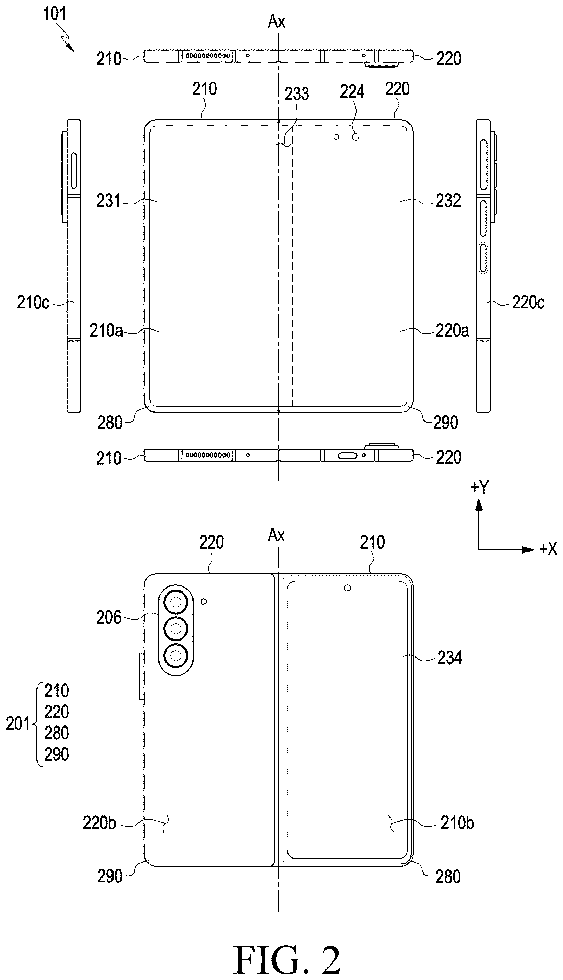

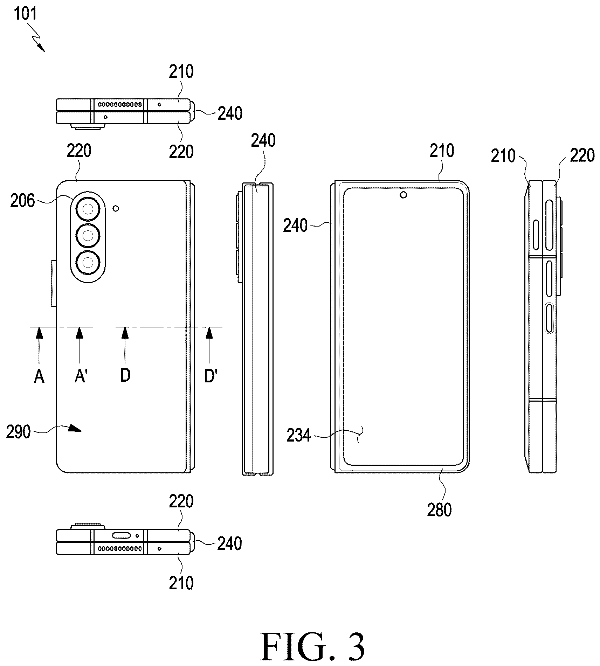

FIG. 2 is a view illustrating an electronic device according to an embodiment of the disclosure in an unfolded state. FIG. 3 is a view illustrating the electronic device according to an embodiment of the disclosure in a folded state.

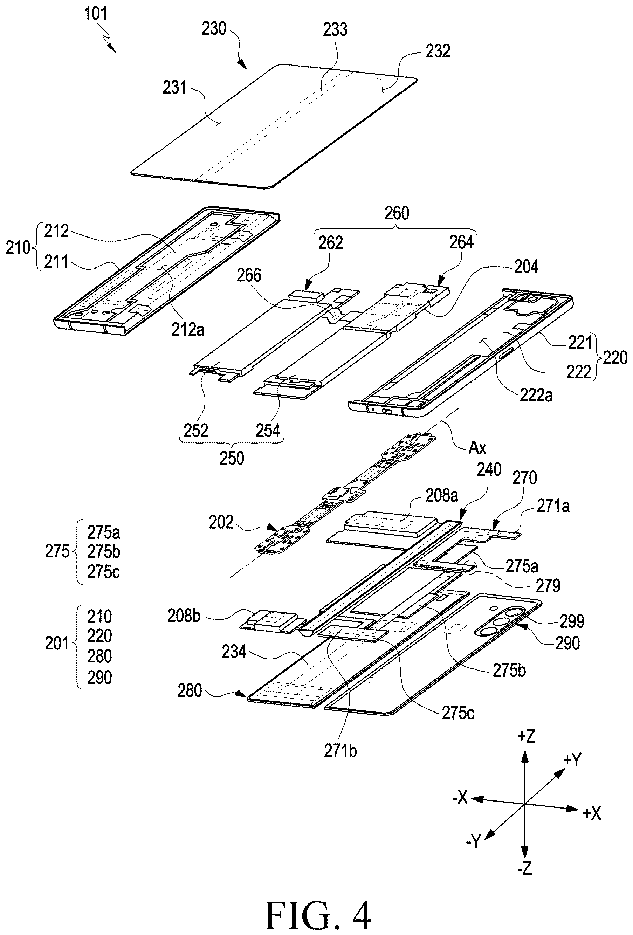

The embodiment of FIGS. 2 and 3 may be combined with the embodiment of FIG. 1 or the embodiments of FIGS. 4 to 16.

Referring to FIGS. 2 and 3, an electronic device 101 (e.g., the electronic device 101 of FIG. 1) may include a housing 201, a hinge cover 240 covering a foldable portion of the housing 201, and a display 230 (e.g., the display module 160 of FIG. 1) disposed within a space defined by the housing 201. The electronic device 101 may be defined and/or referred to as a foldable electronic device 101.

According to an embodiment, a side of the display 230, on which an output screen is exposed, may be defined as a front surface of the electronic device 101 (e.g., a first front surface 210a and a second front surface 220a). The side opposite to the front surface may be defined as the rear surface (e.g., a first rear surface 210b and a second rear surface 220b) of the electronic device 101. In an embodiment, a side surrounding the space between the front and rear surfaces may defined as a lateral side (e.g., a first lateral side 210c and a second lateral side 220c) of the electronic device 101. The lateral side of the electronic device 101 may be the lateral side of at least one of the first housing 210 or the second housing 220. The electronic device 101 of FIGS. 2 and 3 may be referred to as a "foldable electronic device," a "portable electronic device" or a "portable foldable electronic device." According to an embodiment, the housing 201 may be referred to as a "foldable housing." The display 230 may be defined and/or referred to as a flexible display or a foldable display.

According to an embodiment, the display 230 (e.g., a flexible display) may include a display panel, a support plate configured to support the display panel, and/or a cover glass covering an outer surface of the display panel. The support plate may include a plurality of grooves and/or a plurality of openings formed in at least a portion of the support plate corresponding to the hinge 202. The support plate may be defined and/or referred to as a lattice plate including a lattice pattern defined by the plurality of grooves and/or the plurality of openings. By including the lattice pattern, the support plate may allow the electronic device 101 to be more easily folded or unfolded.

According to an embodiment, the housing 201 may form at least a portion of an exterior of the electronic device 101. The housing 201 may include a first housing 210, a second housing 220 rotatable/foldable with respect to the first housing 210, a first rear cover 280, and a second rear cover 290. The housing 201 of the electronic device 101 is not limited to the shape and assembly illustrated in FIGS. 2 and 3, but may be implemented by combinations and/or assemblies of other shapes or components. For example, in an embodiment, the first housing 210 and the first rear cover 280 may be integrated, and the second housing 220 and the second rear cover 290 may be integrated. According to an embodiment, the first rear cover 280 may be defined and/or referred to as a first rear surface plate 280. The second rear cover 290 may be defined and/or referred to as a second rear surface plate 290.

According to an embodiment, the housing 201 may be defined and/or referred to as a foldable housing 201. The first housing 210 may be defined and/or referred to as a first housing portion 210. The second housing 220 may be defined and/or referred to as a second housing portion 220.

According to an embodiment, the first housing 210 may be connected to a hinge structure (e.g., the hinge structure 202 of FIG. 4) and may include a first front surface 210a oriented in a first direction and a first rear surface 210b oriented in a second direction opposite to the first direction. The second housing 220 may be connected to the hinge structure and may include a second front surface 220a oriented in a third direction and a second rear surface 220b oriented in a fourth direction opposite to the third direction, and may be rotatable with respect to the first housing 210 about the hinge structure 202. Accordingly, the electronic device 101 may transition from a folded state or an unfolded state. An unfolded state may refer to a partially or fully unfolded state but in this disclosure it predominantly refers to the fully unfolded state. The folding or unfolding operation of the electronic device 101 may be understood as a rotation of the first housing 210 relative to the hinge structure, a rotation of the second housing 220 with respect to the hinge structure, and/or rotation/folding of the first housing 210 relative to the second housing 220. In the folded state of the electronic device 101, the first front surface 210a may face the second front surface 220a. In a fully unfolded state of the electronic device 101, the third direction may be the same as the first direction such that the first front surface 210a and the second front surface 220a are parallel and in the same plane. Hereinbelow, unless otherwise stated, directions will be described with reference to the fully unfolded state of the electronic device 101. The hinge structure may also for example be referred to as a rotational coupling, folding mechanism, hinge mechanism, or hinge coupling.

According to an embodiment, the first housing 210 and the second housing 220 may be disposed on opposite sides of the folding axis Ax and may have an overall symmetrical shape with respect to the folding axis Ax. The folding axis Ax may be defined as an axis defined or provided by a hinge structure (e.g., the hinge structure 202 of FIG. 4). As will be described later, the angle or distance between the first housing 210 and the second housing 220 may vary depending on whether the electronic device 101 is in the unfolded state, in the folded state, or in the intermediate state (i.e. partially unfolded or partially folded state). According to an embodiment, the second housing 220 additionally includes a sensor area 224 where sensors (e.g., a front camera) are disposed, but the second housing 220 may have a mutually symmetrical shape in other areas.

According to an embodiment, the folding axis Ax may be a plurality of parallel folding axes (e.g., two folding axes). In the disclosure, the folding axis Ax is provided along the length direction of the electronic device 101 (the Y-axis direction), but the direction of the folding axis Ax is not limited thereto. For example (not illustrated), an embodiment, in which the electronic device 101 includes a folding axis extending in the width direction (e.g., the X-axis direction), may be implemented.

According to an embodiment, the electronic device 101 may include a structure to which a digital pen (not illustrated) is attachable. For example, the electronic device 101 may include a magnetic body configured to attach the digital pen to the lateral side of the first housing 210 or the lateral side of the second housing 220. According to an embodiment, the electronic device 101 may include a structure into which a digital pen is insertable. For example, a hole (not illustrated) into which the digital pen is insertable may be provided in the lateral side of the first housing 210 or the lateral side of the second housing 220 of the electronic device 101.

According to an embodiment, the first housing 210 and the second housing 220 may be at least partially made of a metal or non-metal material having rigidity in a level selected in order to support the display 230. The at least a portion made of the metal material may provide a ground plane of the electronic device 101, and may be electrically connected to a ground line provided on a printed circuit board (e.g., the board unit 260 in FIG. 4).

According to an embodiment, the sensor area 224 may have a predetermined area adjacent to an edge or a corner of the second housing 220. However, the arrangement, shape, and size of the sensor area 224 are not limited to the illustrated example. According to an embodiment, the sensor area 224 may be provided at another corner or at any area between the upper and lower end corners in the second housing 220 or in the first housing 210. In an embodiment, components embedded in the electronic device 101 to carry out various functions may be exposed on the front surface of the electronic device 101 through the sensor area 224 or through one or more openings provided in the sensor area 224. In an embodiment, the components may include various types of sensors. The sensor(s) may include, for example, at least one of a front camera, a receiver, or a proximity sensor.

According to an embodiment, the first rear cover 280 may be disposed on one side of the folding axis Ax on the rear surface of the electronic device 101 and, for example, may have a substantially rectangular periphery. The periphery may be surrounded by other structures of the first housing 210. Similarly, the second rear cover 290 may be disposed on the other side of the folding axis Ax on the rear surface of the electronic device 101. The periphery of the second rear cover may be surrounded by other structures of the second housing 220.

According to an embodiment, the first rear cover 280 and/or the second rear cover 290 may have a substantially symmetrical shape about the folding axis Ax. However, the first rear cover 280 and the second rear cover 290 do not necessarily have mutually symmetrical shapes, and in an embodiment, the electronic device 101 may include the first rear cover 280 and the second rear cover 290 having different, asymmetrical shapes.

According to an embodiment, the first rear cover 280, the second rear cover 290, the first housing 210, and the second housing 220 may provide a space in which various components (e.g., a printed circuit board or a battery) of the electronic device 101 may be disposed. According to an embodiment, one or more components may be disposed or visually exposed on the rear surface of the electronic device 101. For example, at least a portion of a sub-display 234 may be visually exposed through at least a portion of the first rear cover 280. According to an embodiment, one or more components or sensors may be visually exposed through at least a portion of the second rear cover 290. In various embodiments, the sensors may include a proximity sensor and/or a camera module 206 (e.g., a rear camera).

According to an embodiment, a front camera exposed to the front surface of the electronic device 101 through one or more openings provided in the sensor area 224 or a camera module 206 (e.g., a rear camera) exposed through at least a portion of the second rear cover 290 may include one or more lenses, an image sensor, and/or an image signal processor. In some embodiments, two or more lenses (e.g., an infrared camera lens, a wide-angle lens, and a telephoto lens) and image sensors may be disposed on one surface of the electronic device 101.

According to an embodiment, the camera module 206 exposed through at least a portion of the second rear cover 290 disposed opposite to a second display area 232 of the display 230.

According to an embodiment, the hinge cover 240 is disposed between the first housing 210 and the second housing 220 and may cover internal components (e.g., the hinge structure 202 in FIG. 4). According to an embodiment, the hinge cover 240 may be covered by a portion of the first housing 210 and a portion of the second housing 220, or may be exposed to the outside depending on the state of the electronic device 101 (the unfolded state (flat state) or the folded state).

According to an embodiment, as illustrated in FIG. 2, when the electronic device 101 is in the unfolded state, the hinge cover 240 may not be exposed by being covered by the first housing 210 and the second housing 220. According to an embodiment, as illustrated in FIG. 3, when the electronic device 101 is in the folded state (e.g., fully folded state), the hinge cover 240 may be exposed to the outside between the first housing 210 and the second housing 220. According to an embodiment, when the first housing 210 and the second housing 220 are in the intermediate state in which the first and second housings are folded with a certain angle (i.e. less than 180 degrees) therebetween, the hinge cover 240 may be partially exposed to the outside between the first housing 210 and the second housing 220. However, the area exposed in this case may be smaller than that in the fully folded state. In an embodiment, the hinge cover 240 may include a curved surface.

In an embodiment, the display 230 may be disposed in the space provided (or defined) by the housing 201. For example, the display 230 may be seated in a recess provided by the housing 201, and may constitute most of the front surface of the electronic device 101. Accordingly, the front surface of the electronic device 101 may include the display 230, and partial areas of the first housing 210 and the second housing 220, which are adjacent to the display 230. The rear surface of the electronic device 101 may include the first rear cover 280, a partial area of the first housing 210 adjacent to the first rear cover 280, the second rear cover 290, and a partial area of the second housing 220 adjacent to the second rear cover 290.

According to an embodiment, the display 230 may include a plurality of display areas spaced apart from each other. For example, the display 230 may include a first display area 231 disposed on the first housing 210, a second display area 232 disposed on the second housing 220, and a folding area 233. According to an embodiment, the first display area 231 and the second display area 232 may be rotatable about the folding axis Ax. According to an embodiment, the first display area 231 may be defined and/or referred to as a first area 231. According to an embodiment, the second display area 232 may be defined and/or referred to as a second area 232.

According to an embodiment, the first display area 231 may be supported by the first housing 210. According to an embodiment, the second display area 232 may be supported by the second housing 220.

According to an embodiment, the display 230 may refer to a display that is at least partially deformable into a planar surface or a curved surface. For example, the display 230 may be a foldable or flexible display. According to an embodiment, the display 230 may include a folding area 233, a first display area 231 disposed on one side of the folding area 233 (e.g., the left side of the folding area 233 illustrated in FIG. 2), and a second display area 232 disposed on the other side of the folding area 233 (e.g., the right side of the folding area 233 illustrated in FIG. 2). For example, the folding area 233 may be connected to the first display area 231 and the second display area 232 and may be disposed between the first display area 231 and the second display area 232. According to an embodiment, the first display area 231 and the second display area 232 may extend from the folding area 233. However, the area division of the display 230 is exemplary, and the display 230 may be divided into a plurality of areas (e.g., four or more areas or two areas) depending on the structure or functions thereof. For example, in the embodiment illustrated in FIG. 2, the areas of the display 230 may be divided by the folding area 233 extending parallel to the Y-axis or the folding axis Ax. According to an embodiment, the areas of the display 230 may also be divided based on another folding area (e.g., a folding area extending parallel to the X-axis) or another folding axis (e.g., a folding axis extending parallel to the X-axis). According to an embodiment, the display 230 may be coupled to or disposed adjacent to a touch sensing circuit, a pressure sensor configured to measure touch intensity (pressure), and/or a digitizer (not illustrated) configured to detect a magnetic field-type stylus pen.

According to an embodiment, the first display area 231 and the second display area 232 may have generally symmetrical shapes about the folding area 233. According to an embodiment (not illustrated), unlike the first display area 231, the second display area 232 may include a notch cut due to the presence of the sensor area 224, but may have a shape substantially symmetrical to the first display area 231 in areas other than the sensor area. For example, the first display area 231 and the second display area 232 may include portions having mutually symmetrical shapes and portions having mutually asymmetrical shapes.

Hereinafter, the operations of the first housing 210 and the second housing 220 depending on the states of the electronic device 101 (e.g., a flat or unfolded state and a folded state) and respective areas of the display 230 will be described.

According to an embodiment, when the electronic device 101 is in the unfolded state (the flat state) (e.g., FIG. 2), the first housing 210 and the second housing 220 may be disposed to substantially form an angle of 180 degrees therebetween and to be oriented in the same direction. The surface of the first display area 231 and the surface of the second display area 232 of the display 230 may form 180 degrees therebetween and may be oriented in the same direction (e.g., the front direction of the electronic device). The folding area 233 may define the same plane as the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may face each other while forming a narrow angle (e.g., between 0 degrees and 10 degrees) therebetween. When the electronic device 101 is in the folded state, at least a portion of the folding area 233 may be formed as a curved surface having a predetermined curvature.

According to an embodiment, when the electronic device 101 is in the intermediate state i.e. partially folded state or partially unfolded state (not illustrated), the first housing 210 and the second housing 220 may be disposed to form a certain angle therebetween. The surface of the first display area 231 and the surface of the second display area 232 of the display 230 may form an angle greater than that in the folded state and smaller than that in the unfolded state. At least a portion of the folding area 233 may form a curved surface having a predetermined curvature, and the curvature in this case may be smaller than that in the folded state.

FIG. 4 is an exploded perspective view of an electronic device according to an embodiment of the disclosure.

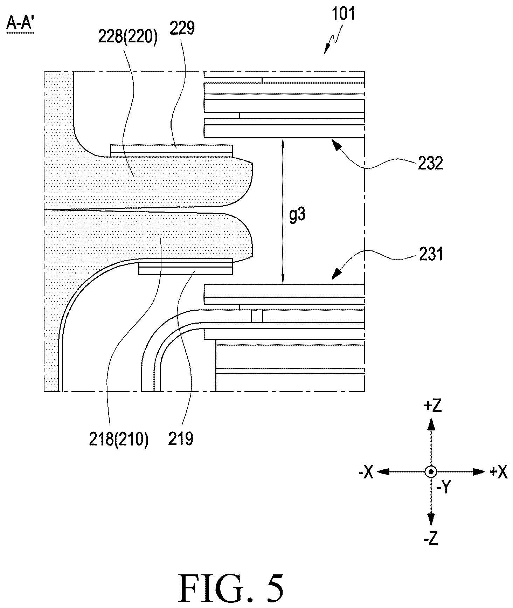

The embodiment of FIG. 4 may be combined with the embodiments of FIGS. 1 to 3 or the embodiments of FIGS. 5 to 16.

The configurations of the embodiment in FIG. 4 may be partially or entirely the same as the configurations of the embodiments in FIGS. 1 to 3 or FIGS. 5 to 16.

Referring to FIG. 4, an electronic device 101 (e.g., the electronic device 101 of FIGS. 2 to 3) may include a housing 201, a display 230, a hinge structure 202, a battery 250, and a circuit board 260. For example, the housing 201 may include a first housing 210, a second housing 220, a first rear cover 280, and a second rear cover 290. In an embodiment, the housing 201 may be understood to include a hinge cover 240. The configuration of the first housing 210, the second housing 220, the hinge cover 240, the first rear cover 280, and the second rear cover 290 of FIG. 4 may be wholly or partly the same as the configuration of the first housing 210, the second housing 220, the hinge cover 240, the first rear cover 280, and the second rear cover 290 in FIG. 2 and/or FIG. 3.

According to an embodiment, the housing 201 may be defined and/or referred to as a foldable housing 201. The foldable housing 201 may be defined and/or interpreted as including a first housing 210, a second housing 220, a first rear cover 280, a second rear cover 290, a hinge structure 202, and a hinge cover 240.

According to an embodiment, the first housing 210 and the second housing 220 may be assembled to each other to be coupled to opposite sides of the hinge structure 202. For example, the hinge structure 202 may be disposed in a hinge area between the first housing 210 and the second housing 220 and may rotatably couple the first housing 210 and the second housing 220. Here, the term "hinge area" may refer to a space in which the hinge structure 202 is disposed, an area at least partially surrounded by the hinge cover 240, and/or a space between the folding area 233 of the display 230 and the hinge cover 240. In an embodiment, the hinge area may be understood as a space substantially corresponding to the folding area 233.

According to an embodiment, the hinge structure 202 may connect the first housing 210 and the second housing 220 such that they are rotatable or foldable relative to each other. The hinge structure 202 may be rotatably coupled to the first housing 210 and the second housing 220 so as to enable relative rotation/folding of the first housing 210 and the second housing 220. The hinge structure 202 may be covered by the hinge cover 240. The electronic device 101 may include a hinge assembly including the hinge structure 202 and the hinge cover 240. The hinge structure 202 may be defined and/or referred to as a hinge 202.

According to an embodiment, the hinge structure 202 may provide a folding axis Ax (e.g., the folding axis Ax of FIG. 2). The hinge structure 202 may be connected to a first plate 212 (e.g., a first bracket) of the first housing 210 and a second plate 222 (e.g., a second bracket) of the second housing 220. The housings 210 and 220 may be coupled to the hinge structure 202 and may rotate relative to the hinge structure 202 or the hinge cover 240.

According to an embodiment, the first housing 210 may include a first plate 212 (e.g., a first support member or a first support area) configured to support components of the electronic device 101 (e.g., a first circuit board 262 and/or a first battery 252) and a first surface wall 211 surrounding at least a portion of the first plate 212. The first surface wall 211 may include a first lateral side (e.g., the first lateral side 210c of FIG. 2) of the electronic device 101. According to an embodiment, the second housing 220 may include a second plate 222 (e.g., a second support member or a second support area) configured to support components of the electronic device 101 (e.g., a second circuit board 264 and/or a second battery 254) and a second surface wall 221 surrounding at least a portion of the second plate 222. The second surface wall 221 may include a second lateral side (e.g., the second lateral side 220c in FIG. 2) of the electronic device 101.

According to an embodiment, the first surface wall 211 or the second surface wall 221 may be understood as having a frame shape that at least partially surrounds a space between the front surface and the rear surface of the electronic device 101 (e.g., the first housing 210 or the second housing 220). In an embodiment, the plates 212 and 222 may be structures extending from either of the side walls 211 and 221. For example, for the convenience of explanation, the plates 212 and 222 and the side walls 211 and 221 are described separately. However, the embodiments of the disclosure are not limited thereto, and the plates 212 or 222 and the side walls 211 or 221 may be implemented as a single body. In an embodiment, the plates 212 or 222 and the side walls 211 or 221 may be implemented by combining an insulating material and an electrically conductive material. In this case, the housings 210 and 220 may be integrated with the plates 212 or 222 and the side walls 211 or 221 through an insert molding process and/or a computer numerical control (CNC) machining process.

According to an embodiment, at least a portion of at least one of the housings 210 and 220 may function as an antenna. For example, a portion functioning as an antenna of the electronic device 101 may form at least a portion of at least one lateral side of the housings 210 and 220.

According to an embodiment, the portion functioning as an antenna of the electronic device 101 may be disposed adjacent to at least one lateral side of the housings 210 and 220 and/or be oriented in a direction intersecting the Z-axis (e.g., the X-axis direction or the Y-axis direction). For example, the portion functioning as an antenna of the electronic device 101 may be implemented by a portion of the housings 210 and 220 or may be manufactured as a separate component and disposed adjacent to the peripheries of the housings 210 and 220. According to an embodiment, the phrase "the portion functioning as an antenna of the electronic device 101 is implemented by a portion of the housings 210 and 220" may be understood to include, for example, an embodiment in which the portion functioning as an antenna is disposed to form a lateral side of at least one of the housings 210 and 220.

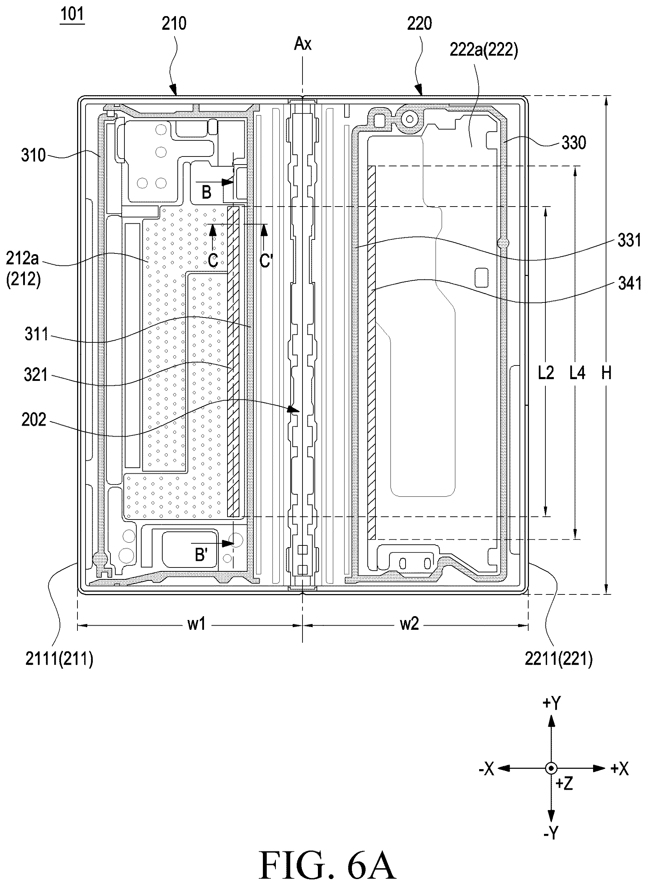

Although not illustrated, the first housing 210 may include a first waterproofing member (e.g., the first waterproofing member 310 of FIG. 6A) disposed on the first plate 212, and the second housing 220 may include a second waterproofing member (e.g., the second waterproofing member 330 of FIG. 6A) disposed on the second plate 222. The first waterproofing member and/or the second waterproofing member may be disposed in a gap between the display 230 and the plates 212 and 222 to prevent the inflow of moisture or foreign substances into the first housing 210 and/or the second housing 220 from the outside.

According to an embodiment, the display 230 (e.g., a flexible display or a foldable display) may include a first display area 231, a second display area 232, and/or a folding area 233. The configurations of the first display area 231, the second display area 232, and the folding area 233 of FIG. 4 may be partially or entirely the same as the configurations of the first display area 231, the second display area 232, and the folding area 233 of FIG. 2.

According to an embodiment, the first plate 212 may include a first front surface 212a and a first rear surface opposite to the first front surface 212a. The second plate 222 may include a second front surface 222a and a second rear surface opposite to the second front surface 222a.

According to an embodiment, the first front surface 212a of the first plate 212 may be defined and/or referred to as a first surface 212a. According to an embodiment, the first rear surface 212b of the first plate 212 may be defined and/or referred to as a second surface 212b. According to an embodiment, the second front surface 222a of the second plate 222 may be defined and/or referred to as a third surface 222a. According to an embodiment, the second rear surface 222b of the second plate 222 may be defined and/or referred to as a fourth surface 222b.

According to an embodiment, the first display area 231 may be supported by the first front surface 212a of the first plate 212. For example, the first display area 231 may be disposed at least partially on the first front surface 212a.

According to an embodiment, the second display area 232 may be supported by the second front surface 222a of the second plate 222. For example, the second display area 232 may be disposed at least partially on the second front surface 222a.

According to an embodiment, the electronic device 101 may further include a sub-display 234. The sub-display 234 may display a screen in a direction different from that of the display areas 231 and 232. For example, the sub-display 234 may output a screen in a direction opposite to the first display area 231. According to an embodiment, the sub-display 234 may be disposed on the first rear cover 280. For example, the sub-display 234 may be disposed between the first rear cover 280 and the first plate 212.

According to an embodiment, the electronic device 101 may include a camera assembly 204 in which a plurality of cameras are combined (e.g., the camera module 206 of FIG. 2 or FIG. 3). Although not illustrated, the electronic device 101 may further include a camera configured to capture a subject through a portion of the display 230 (e.g., the first display area 231 or the second display area 232) or a camera configured to capture a subject through a portion of the sub-display 234.

According to an embodiment, the electronic device 101 and/or the second rear cover 290 may include a cover plate 299 disposed corresponding to the camera assembly 204. The cover plate 299 may, for example, provide an optical path (e.g., a through-hole) corresponding to the camera assembly 204 while harmonizing the optical path with the exterior of the electronic device 101. To impart an aesthetic sensation to the exterior of the electronic device 101 or to achieve a harmonious exterior design, the cover plate 299 may include a metallic material. For example, the cover plate 299 may be made of a metallic material or finished (e.g., printed, deposited, coated, or plated) with a metallic material. In an embodiment, the cover plate 299 may be understood as a portion of the second rear cover 290. A portion (e.g., the periphery) of the cover plate may be disposed inside the second rear cover 290 and another portion may be exposed to the outside.

According to an embodiment, the camera assembly 204 including a plurality of cameras may be defined and/or referred to as a rear camera assembly 204 exposed through the rear surface of the electronic device 101 or the rear surface of the second housing 220. The camera assembly 204 may be covered by the cover plate 299 to be protected from external impact. The cover plate 299 may be defined and/or referred to as a protective member or a camera decorative member.

According to an embodiment, the camera assembly 204 may be disposed opposite to the second display area 232 of the flexible display 230.

According to an embodiment, the battery 250 may include a first battery 252 disposed in the first housing 210 and a second battery 254 disposed in the second housing 220. According to an embodiment, the first battery 252 may be connected to a first circuit board 262, and the second battery 254 may be connected to a second circuit board 264. According to an embodiment, the battery 250 may supply power to at least one component of the electronic device 101. According to an embodiment, the battery 250 may include, for example, a non-rechargeable primary cell, a rechargeable secondary cell, or a fuel cell.

According to an embodiment, the first battery 252 may be disposed on the first rear surface of the first plate 212 (e.g., the rear surface oriented in the -Z direction in FIG. 4) and may be accommodated in a space defined between the first plate 212 and the first rear cover 280. The second battery 254 may be disposed on the second rear surface (e.g., the rear surface oriented in the -Z direction in FIG. 4) of the second plate 222 and may be accommodated in a space defined between the second plate 222 and the second rear cover 290.

According to an embodiment, the circuit board 260 may include a first circuit board 262 disposed in the first housing 210 and a second circuit board 264 disposed in the second housing 220. According to an embodiment, the first circuit board 262 and the second circuit board 264 may be electrically connected by at least one flexible printed circuit board 266. According to an embodiment, at least a portion of the flexible printed circuit board 266 may be disposed across the hinge area or the hinge structure (e.g., the hinge structure 202). According to an embodiment, the first circuit board 262 and the second circuit board 264 may be disposed inside a space defined by the first housing 210, the second housing 220, the first rear cover 280, and the second rear cover 290. Components for implementing various functions of the electronic device 101 may be mounted on the first circuit board 262 and the second circuit board 264.

According to an embodiment, the first circuit board 262 may be disposed on the first rear surface (e.g., the rear surface oriented in the -Z direction in FIG. 4) of the first plate 212 and may be accommodated in a space formed between the first plate 212 and the first rear cover 280. The second circuit board 264 may be disposed on the second rear surface (e.g., the rear surface oriented in the -Z direction in FIG. 4) of the second plate 222 and may be accommodated in a space defined between the second plate 222 and the second rear cover 290.

According to an embodiment, the first circuit board 262 may include at least one of a printed circuit board (PCB), a flexible printed circuit board (FPCB), or a rigid-flexible PCB (RF-PCB).

According to an embodiment, the electronic device 101 may include speakers 208a and 208b. According to an embodiment, the speakers 208a and 208b may convert electrical signals into sound. According to an embodiment, the speakers 208a and 208b may be disposed inside the space defined by the first housing 210, the second housing 220, the first rear cover 280, and the second rear cover 290. According to an embodiment, the speakers 208a and 208b may include an upper speaker 208a located in an upper portion (the +Y direction) of the electronic device 101 and a lower speaker 208b located in the lower portion (the -Y direction) of the electronic device 101. In the disclosure, the speakers 208a and 208b are illustrated as being located within one housing (e.g., the first housing 210 in FIG. 4), but this is an optional structure. For example, the speakers 208a and 208b may be located within at least one of the first housing 210 or the second housing 220. The configuration of the speakers 208a and 208b in FIG. 4 may be wholly or partly the same as the configuration of the sound output module 155 in FIG. 1.

According to an embodiment, the electronic device 101 may include a rear member 270 (or a rear case). According to an embodiment, the rear member 270 may be disposed within the housing 201 (e.g., the second housing 220). According to an embodiment, the rear member 270 may accommodate at least one antenna 275. In an embodiment, the rear member 270 may function as a structure for disposing an antenna 275 and may function as a structure configured to support or protect one of the circuit boards 262 and 264. For example, a portion of the rear member 270 indicated by reference number 279 may support a portion of the circuit boards 262 and 264.

According to an embodiment, the electronic device 101 may include an antenna 275. The antennas 275a and 275b may include, for example, an ultrawide band (UWB) antenna 275a, a near field communication (NFC) antenna, a wireless charging antenna, and/or a magnetic secure transmission (MST) antenna 275b. For example, the antenna 275 may execute short-range communication with an external device or may transmit/receive power required for charging to/from an external device in a wireless manner.

In an embodiment, an antenna structure may be provided by portions of the housing 201 or a combination thereof. For example, the antenna 275 may include a communication antenna 275c. The communication antenna 275c may be used for communication with an external electronic device (e.g., Wi-Fi). For example, the communication antenna 275c may be located at an upper portion 271a or a lower portion 271b of the rear member 270. In addition, the electronic device 101 may further include additional antennas disposed adjacent to a portion of the side walls 211 and 221 or electronic components such as the camera assembly 204.

According to an embodiment, the first plate 212 may be disposed between the first display area 231 and the first rear cover 280. The first display area 231 may be disposed on the first front surface 212a (e.g., the side oriented in the +Z direction in FIG. 4) of the first plate 212. The first rear cover 280 may be disposed below the first rear surface (e.g., the side oriented in the -Z direction in FIG. 4) of the first plate 212.

According to an embodiment, the first battery 252 and the first circuit board 262 may be disposed on the first rear surface (e.g., the side oriented in the -Z direction in FIG. 4) of the first plate 212. For example, the first battery 252 and the first circuit board 262 may be disposed between the first plate 212 and the first rear cover 280. The first plate 212 may be disposed between the first display area 231 and the first battery 252. The first plate 212 may be disposed between the first display area 231 and the first circuit board 262.

According to an embodiment, the second plate 222 may be disposed between the second display area 232 and the second rear cover 290. The second display area 232 may be disposed on the second front surface 222a (e.g., the side oriented in the +Z direction in FIG. 4) of the second plate 222. The second rear cover 290 may be disposed below the second rear surface (e.g., the side oriented in the -Z direction in FIG. 4) of the first plate 222.

According to an embodiment, the second battery 254 and the second circuit board 264 may be disposed on the second rear surface (e.g., the side oriented in the -Z direction in FIG. 4) of the second plate 222. For example, the second battery 254 and the second circuit board 264 may be disposed between the second plate 222 and the second rear cover 290. The second plate 222 may be disposed between the second display area 232 and the second battery 254. The second plate 222 may be disposed between the second display area 232 and the second circuit board 264.

FIG. 5 is a cross-sectional view of an electronic device according to an embodiment of the disclosure, taken along line A-A' in FIG. 3.

The embodiment of FIG. 5 may be combined with the embodiments of FIGS. 1 to 4 or the embodiments of FIGS. 6A to 16.

The configurations of the embodiment in FIG. 5 may be partially or entirely the same as the configurations of the embodiments in FIGS. 1 to 4 or FIGS. 6 to 16.

FIG. 5 illustrates the arrangement relationship of the first display area 231 (e.g., the first display area 231 of FIG. 4) and the second display area 232 (e.g., the second display area 232 of FIG. 4) when the electronic device 101 (e.g., the electronic device 101 of FIGS. 2 to 4) is in the folded state (e.g., FIG. 3).

According to an embodiment, when the electronic device 101 is in the folded state (e.g., when the folding area 233 of FIG. 4 is folded), the first display area 231 and the second display area 232 may be configured to face each other.

According to an embodiment, a gap g3 may be formed between the surface of the first display area 231 (e.g., the surface oriented in the +Z direction in FIG. 5) and the surface of the second display area 232 (e.g., the surface oriented in the -Z direction in FIG. 5).

According to an embodiment, the first housing 210 (e.g., the first housing 210 of FIG. 4) may include a first protection member 218. The first protection member 218 may be coupled to the first surface wall (e.g., the first surface wall 211 of FIG. 4) of the first housing 210.

According to an embodiment, the first protection member 218 may be disposed to cover the periphery of the first display area 231. The first protection member 218 may be spaced apart from the periphery of the first display area 231.

According to an embodiment, the electronic device 101 may include a first member 219 disposed on an inner surface (e.g., the surface facing the first display area 231) of the first protection member 218. The first member 219 may include a conductive portion (e.g., a conductive tape) disposed on the inner surface of the first protection member 218 and a non-conductive portion (e.g., a sponge) laminated on the conductive portion. The non-conductive portion may be disposed to block the inflow of foreign substances into the interior of the electronic device 101 through a gap formed between the periphery of the first display area 231 and the first protection member 218. When an external electrical stimulus (e.g., static electricity) enters through the gap formed between the periphery of the first display area 231 and the first protection member 218, the conductive portion may form at least a portion of a conductive path that allows the electrical stimulus to be transmitted to the ground of the electronic device 101 through the first protection member 218.

According to an embodiment, the second protection member 228 may be disposed to cover the periphery of the second display area 232. The second protection member 228 may be spaced apart from the periphery of the second display area 232.

According to an embodiment, the electronic device 101 may include a second member 229 disposed on an inner surface of the second protection member 228 (e.g., the surface oriented in the second display area 232). The second member 229 may include a conductive portion (e.g., a conductive tape) disposed on the inner surface of the second protection member 228 and a non-conductive portion (e.g., a sponge) laminated on the conductive portion. The non-conductive portion may be disposed to block the inflow of foreign substances into the interior of the electronic device 101 through a gap formed between the periphery of the second display area 232 and the second protection member 228. When an external electrical stimulus (e.g., static electricity) enters through the gap formed between the periphery of the second display area 232 and the second protection member 228, the conductive portion may form at least a portion of a conductive path that allows the electrical stimulus to be transmitted to the ground of the electronic device 101 through the second protection member 228.

According to an embodiment, when the electronic device 101 is in the folded state (e.g., FIG. 3 or FIG. 5), the first protection member 218 and the second protection member 228 may come into contact with each other. As the first protection member 218 and the second protection member 228 cover the peripheries of the display areas 231 and 232, a gap g3 may be formed between the first display area 231 and the second display area 232. With the formation of the gap g3, the first display area 231 and the second display area 232 may not come into contact with each other. Accordingly, damage to the surfaces of the first display area 231 and the second display area 232 may be restricted and/or reduced. In addition, the gap g3 between the first display area 231 and the second display area 232 may be maintained by the protection members 218 and 228. Therefore, even if foreign substances are present between the first display area 231 and the second display area 232, the occurrence of dents on the surfaces of the first display area 231 and the second display area 232 due to the foreign substances may be restricted and/or reduced.

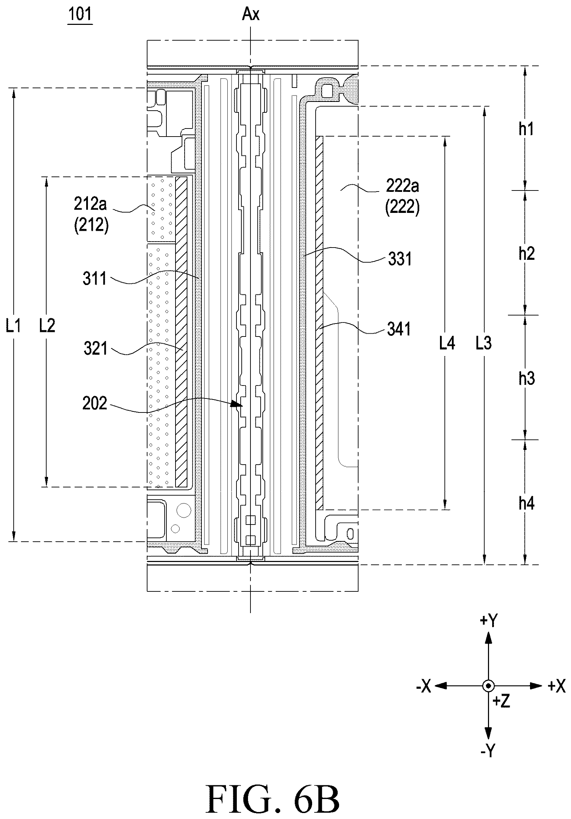

FIG. 6A is a plan view of an electronic device according to an embodiment of the disclosure. FIG. 6B is an enlarged view of a portion of the electronic device of FIG. 6A according to an embodiment of the disclosure.

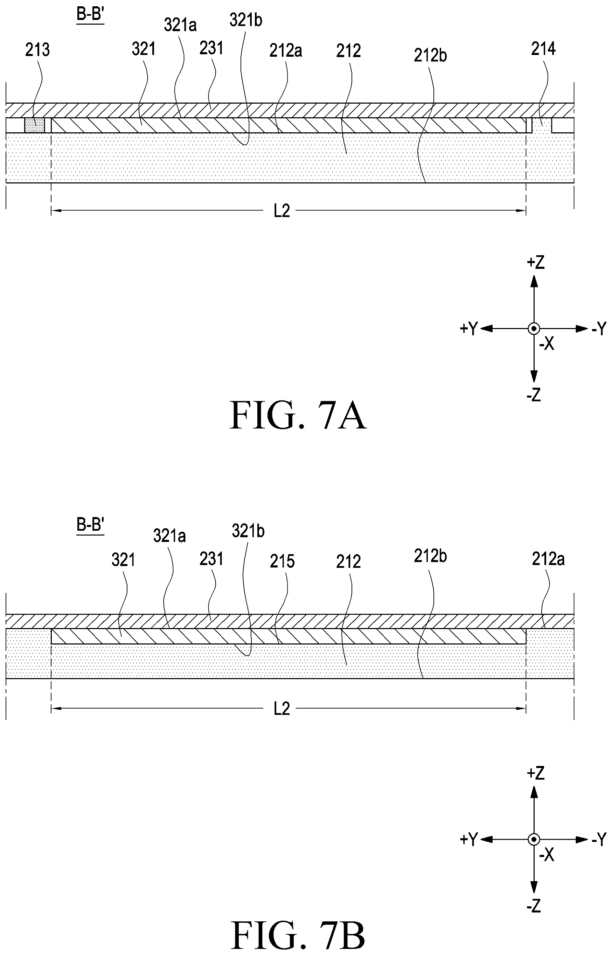

The embodiments of FIGS. 6A and 6B may be combined with the embodiments of FIGS. 1 to 5 or the embodiments of FIGS. 7A to 16.

The configurations of the embodiments of FIGS. 6A and 6B may be partially or entirely the same as the configurations of the embodiments of FIGS. 1 to 5 or the configurations of the embodiments of FIGS. 7A to 16.

Referring to FIGS. 6A and 6B, an electronic device 101 (e.g., the electronic device 101 of FIGS. 2 to 5) may include a foldable housing (e.g., the foldable housing 201 of FIG. 2) including a first housing 210 (e.g., the first housing 210 of FIG. 4) and a second housing 220 (e.g., the second housing 220 of FIG. 4).

According to an embodiment, the electronic device 101 may include a hinge 202 (e.g., the hinge structure 202 of FIG. 4) connected to the first housing 210 and the second housing 220.

According to an embodiment, the first housing 210 and the second housing 220 may be connected to the hinge 202 and may be relatively rotatable with respect to each other via the hinge 202.

According to an embodiment, the first housing 210 and the second housing 220 may rotate relative to each other based on a hinge axis Ax (e.g., the hinge axis Ax of FIGS. 2 and 4) defined or provided by the hinge 202.

According to an embodiment, the first housing 210 may include a first plate 212 (e.g., the first plate 212 of FIG. 4) and a first surface wall 211 connected to the first plate 212.

According to an embodiment, the second housing 220 may include a second plate 222 (e.g., the second plate 222 of FIG. 4) and a second surface wall 221 connected to the second plate 222.

According to an embodiment, the electronic device 101 may include a first waterproofing member 310 and a second waterproofing member 330.

According to an embodiment, the first waterproofing member 310 may include a waterproofing material. The first waterproofing member 310 may be disposed on the first front surface 212a of the first housing 210 (e.g., the first plate 212).

According to an embodiment, the first waterproofing member 310 may be disposed between the first front surface 212a and the first display area (e.g., the first display area 231 of FIG. 4). The first waterproofing member 310 may be adhered to the first front surface 212a and the first display area. For example, the first waterproofing member 310 may include a waterproofing tape. For example, the first waterproofing member 310 may include a double-sided tape. For example, the double-sided tape of the first waterproofing member 310 may include a double-sided tape having a waterproofing function and/or a double-sided tape having thermal conductivity. For example, the first waterproofing member 310 may include at least one of an acrylic foam tape, an epoxy tape, and a PE foam tape (polyethylene foam tape).

According to an embodiment, the first waterproofing member 310 may generally have a loop shape, but is not limited thereto. The first waterproofing member 310 may form a waterproofing area to block the inflow of foreign substances or liquid from the outside of the electronic device 101 to electrical/electronic components disposed inside the loop shape of the first waterproofing member 310.

According to an embodiment, the first display area (e.g., the first display area 231 of FIG. 4) may be fixed or coupled to the first front surface 212a of the first plate 212 via the first waterproofing member 310.

According to an embodiment, the second waterproofing member 330 may include a waterproofing material. The second waterproofing member 330 may be disposed on the second front surface 222a of the second housing 220 (e.g., the second plate 222).

According to an embodiment, the second waterproofing member 330 may be disposed between the second front surface 222a and the second display area (e.g., the second display area 232 of FIG. 4). The second waterproofing member 330 may be adhered to the second front surface 222a and the second display area. For example, the second waterproofing member 330 may include a waterproofing tape. For example, the second waterproofing member 330 may include a double-sided tape. For example, the double-sided tape of the second waterproofing member 330 may include a double-sided tape having a waterproofing function and/or a double-sided tape having thermal conductivity. For example, the second waterproofing member 330 may include at least one of an acrylic foam tape, an epoxy tape, and a PE foam tape (polyethylene foam tape).

According to an embodiment, the second waterproofing member 330 may generally have a loop shape, but is not limited thereto. The second waterproofing member 330 may form a waterproofing area to block the inflow of foreign substances or liquid from the outside of the electronic device 101 to electrical/electronic components disposed inside the loop shape of the second waterproofing member 330.

According to an embodiment, the second display area (e.g., the second display area 232 of FIG. 4) may be fixed or coupled to the second front surface 222a of the second plate 222 via the second waterproofing member 330.

According to an embodiment, the electronic device 101 may include a first adhesive portion 311. The first adhesive portion 311 may include an adhesive material and may form at least a portion of the first waterproofing member 310. For example, in the first waterproofing member 310, a portion adjacent to and parallel to the folding axis Ax may be defined as the first adhesive portion 311, but is not limited thereto.

According to an embodiment, the first adhesive portion 311 may be disposed between the first front surface 212a and the first display area and may be adhered to the first front surface 212a and the first display area.

According to an embodiment, at least a portion of the first adhesive portion 311 may extend along the folding axis Ax, but is not limited thereto. At least a portion of the first adhesive portion 311 may be elongated along the folding axis Ax. At least a portion of the first adhesive portion 311 may be parallel to the folding axis Ax. Although not illustrated, at least a portion of the first adhesive portion 311 may extend in a direction not parallel to the folding axis Ax.

According to an embodiment, the electronic device 101 may include a second adhesive portion 321. The second adhesive portion 321 may include an adhesive material.

According to an embodiment, the second adhesive portion 321 may be disposed adjacent to the first adhesive portion 311. The first adhesive portion 311 may be disposed between the second adhesive portion 321 and the folding axis Ax based on the unfolded state of the electronic device 101 (e.g., FIG. 2 or FIG. 6A) (e.g., the state in which the folding area 233 of FIG. 4 is unfolded).

According to an embodiment, the second adhesive portion 321 may be disposed between the first front surface 212a and the first display area (e.g., the first display area 231 of FIG. 4).

According to an embodiment, the second adhesive portion 321 may be disposed between the first front surface 212a and the first display area and may be adhered to the first front surface 212a and the first display area.

According to an embodiment, at least a portion of the second adhesive portion 321 may extend along the folding axis Ax, but is not limited thereto. At least a portion of the second adhesive portion 321 may be elongated along the folding axis Ax. At least a portion of the second adhesive portion 321 may be parallel to the folding axis Ax. Although not illustrated, at least a portion of the second adhesive portion 321 may extend in a direction not parallel to the folding axis Ax.

According to an embodiment, the second adhesive portion 321 may be disposed adjacent to the first adhesive portion 311. The second adhesive portion 321 may be spaced apart from the first adhesive portion 311.

According to an embodiment, at least a portion of the second adhesive portion 321 may be parallel to the first adhesive portion 311. At least a portion of the second adhesive portion 321 may be disposed inside the loop-shaped first waterproofing member 310. For example, the length L2 of the second adhesive portion 321 may be smaller than the length L1 of the first adhesive portion.

According to an embodiment, the electronic device 101 may include a third adhesive portion 331. The third adhesive portion 331 may include an adhesive material and may form at least a portion of the second waterproofing member 330. For example, in the second waterproofing member 330, a portion adjacent to and parallel to the folding axis Ax may be defined as the third adhesive portion 331, but is not limited thereto.

According to an embodiment, the third adhesive portion 331 may be disposed between the second front surface 222a and the second display area and may be adhered to the second front surface 222a and the second display area.

According to an embodiment, at least a portion of the third adhesive portion 331 may extend along the folding axis Ax, but is not limited thereto. At least a portion of the third adhesive portion 331 may be elongated along the folding axis Ax. At least a portion of the third adhesive portion 331 may be parallel to the folding axis Ax. Although not illustrated, at least a portion of the third adhesive portion 331 may extend in a direction not parallel to the folding axis Ax.

According to an embodiment, the electronic device 101 may include a fourth adhesive portion 341. The fourth adhesive portion 341 may include an adhesive material.

According to an embodiment, the fourth adhesive portion 341 may be disposed adjacent to the third adhesive portion 331. The third adhesive portion 331 may be disposed between the fourth adhesive portion 341 and the folding axis Ax based on the unfolded state of the electronic device 101 (e.g., FIG. 2 or FIG. 6A) (e.g., the state in which the folding area 233 of FIG. 4 is unfolded).

According to an embodiment, the fourth adhesive portion 341 may be disposed between the second front surface 222a and the second display area (e.g., the second display area 232 of FIG. 4).

According to an embodiment, the fourth adhesive portion 341 may be disposed between the second front surface 222a and the second display area and may be adhered to the second front surface 222a and the second display area.

According to an embodiment, at least a portion of the fourth adhesive portion 341 may extend along the folding axis Ax, but is not limited thereto. At least a portion of the fourth adhesive portion 341 may be elongated along the folding axis Ax. At least a portion of the fourth adhesive portion 341 may be parallel to the folding axis Ax. Although not illustrated, at least a portion of the fourth adhesive portion 341 may extend in a direction not parallel to the folding axis Ax.

According to an embodiment, the fourth adhesive portion 341 may be disposed adjacent to the third adhesive portion 331. The fourth adhesive portion 341 may be spaced apart from the third adhesive portion 331.

According to an embodiment, at least a portion of the fourth adhesive portion 341 may be parallel to the third adhesive portion 331. At least a portion of the fourth adhesive portion 341 may be disposed inside the loop-shaped second waterproofing member 330. For example, the length L4 of the fourth adhesive portion 341 may be smaller than the length L3 of the first adhesive portion.

According to an embodiment, the length L4 of the fourth adhesive portion 341 may be different from the length L2 of the second adhesive portion 321. The length L4 of the fourth adhesive portion 341 may be greater than the length L2 of the second adhesive portion 321, but is not limited thereto. For example, the length of the fourth adhesive portion 341 may be equal to or smaller than the length of the second adhesive portion 341.

According to an embodiment, the first housing 210 may have a predetermined length H in the axial direction of the folding axis Ax (e.g., the Y-axis direction of FIG. 6A). The second housing 220 may have the predetermined length H in the axial direction of the folding axis Ax. The length H of the first housing 210 and the length H of the second housing 220 may be substantially the same, but are not limited thereto.

According to an embodiment, when the length H of the first housing 210 is divided into four equally spaced areas (e.g., h1, h2, h3, and h4 of FIG. 6B), the second adhesive portion 321 may extend from the upper area h1 to the lower area h4 of the first housing 210. For example, the length L2 of the second adhesive portion 321 may be at least half of the length H of the first housing 210, but is not limited thereto.

According to an embodiment, when the length H of the second housing 220 is divided into four equally spaced areas (e.g., h1, h2, h3, and h4 of FIG. 6B), the fourth adhesive portion 341 may extend from the upper area h1 to the lower area h4 of the second housing 220. For example, the length L4 of the fourth adhesive portion 341 may be at least half of the length H of the second housing 220, but is not limited thereto.

According to an embodiment, the first housing 210 may have a predetermined first width w1 from one edge corresponding to the folding axis Ax to the farthest edge 2111 from the folding axis Ax (e.g., the edge 2111 of the first surface wall 211 oriented in the -X direction).

According to an embodiment, the second housing 220 may have a predetermined second width w2 from one edge corresponding to the folding axis Ax to the farthest edge 2211 from the folding axis Ax (e.g., the edge 2211 of the second surface wall 221 oriented in the +X direction).

According to an embodiment, the first width w1 may be substantially the same as the second width w2, but is not limited thereto.

According to an embodiment, the adhesive material of the second adhesive portion 321 may be the same as the adhesive material of the first adhesive portion 311. For example, when the first adhesive portion 311 forms at least a portion of the first waterproofing member 310, the second adhesive portion 321 may include the same material as the first waterproofing member 310. For example, the second adhesive portion 321 may include a double-sided tape. For example, the double-sided tape of the second adhesive portion 321 may include a double-sided tape having a waterproofing function and/or a double-sided tape having thermal conductivity. For example, the second adhesive portion 321 may include at least one of an acrylic foam tape, an epoxy tape, and a PE foam tape (polyethylene foam tape).

According to an embodiment, the adhesive material of the fourth adhesive portion 341 may be the same as the adhesive material of the third adhesive portion 331. For example, when the third adhesive portion 331 forms at least a portion of the second waterproofing member 330, the fourth adhesive portion 341 may include the same material as the second waterproofing member 330. For example, the fourth adhesive portion 341 may include a double-sided tape. For example, the double-sided tape of the fourth adhesive portion 341 may include a double-sided tape having a waterproofing function and/or a double-sided tape having thermal conductivity. For example, the fourth adhesive portion 341 may include at least one of an acrylic foam tape, an epoxy tape, and a PE foam tape (polyethylene foam tape).

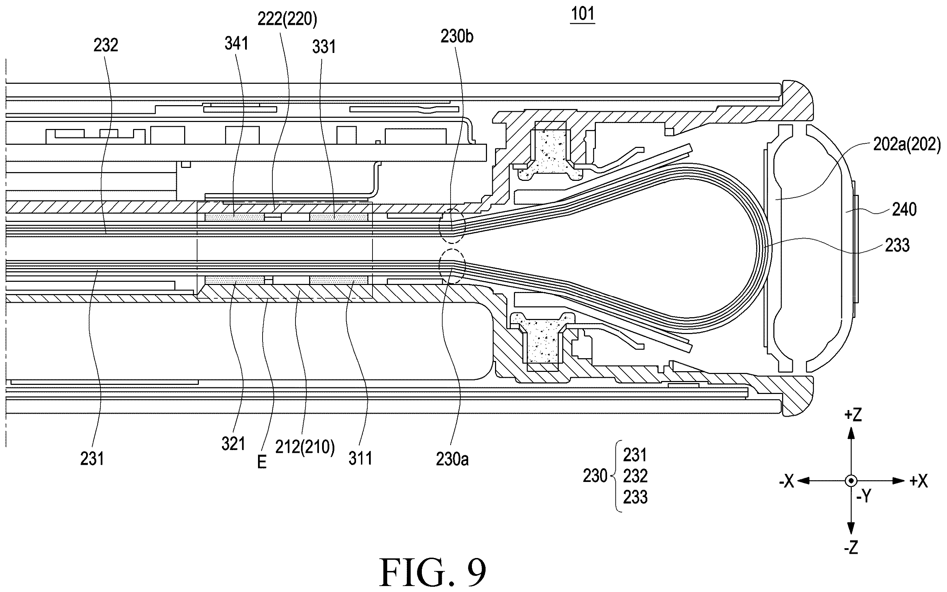

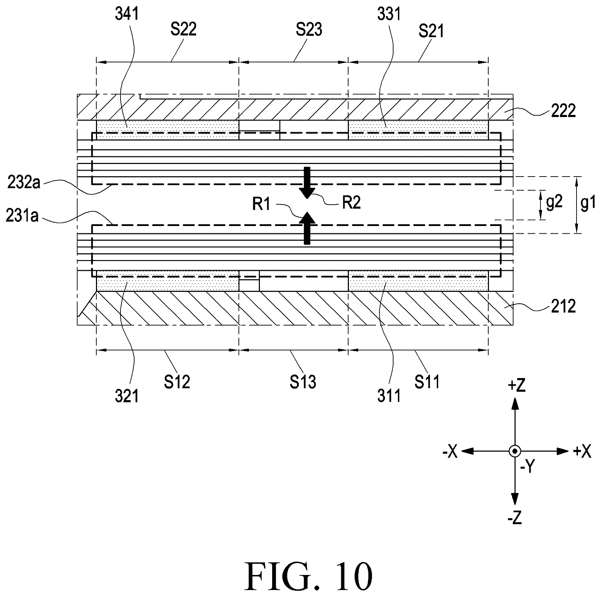

According to an embodiment, the adhesive portions 311, 321, 331, and 341 may be arranged to prevent, reduce, and/or limit contact between the first display area and the second display area adjacent to the folding area when the electronic device 101 is in the folded state (e.g., FIG. 3 or FIG. 9) or when the folding area (e.g., the folding area 233 of FIG. 4) is folded. This will be described in more detail later with reference to FIGS. 9 and 10.

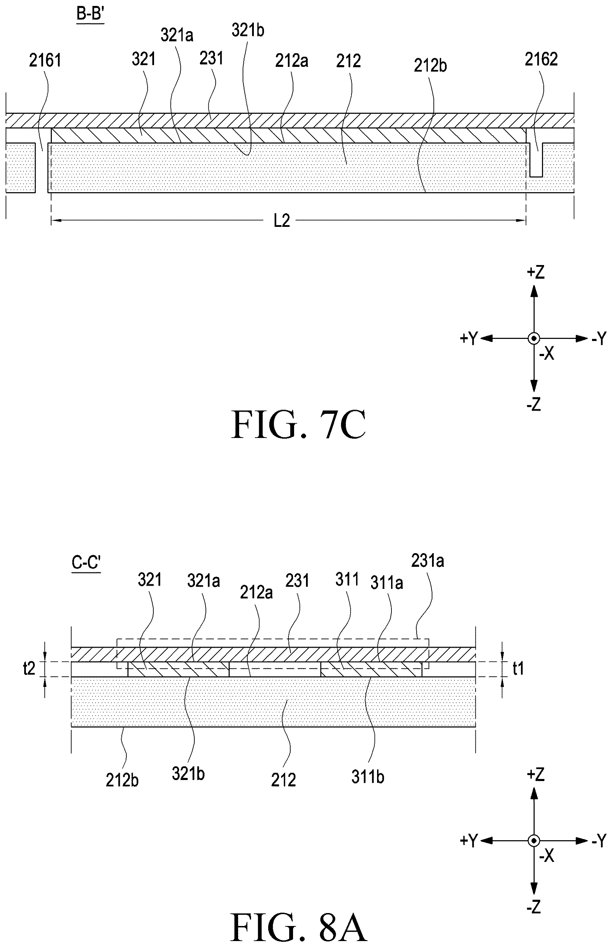

FIGS. 7A, 7B, and 7C are cross-sectional views taken along line B-B' of FIG. 6A according to an embodiment of the disclosure.

The embodiments of FIGS. 7A to 7C may be combined with the embodiments of FIGS. 1 to 6B or the embodiments of FIGS. 8A to 16.

The configurations of the embodiments of FIGS. 7A to 7C may be partially or entirely the same as the configurations of the embodiments of FIGS. 1 to 7C or the configurations of the embodiments of FIGS. 8A to 16.

Hereinafter, the coupling relationship of the second adhesive portion 321, the first display area 231, and the first plate 212 will be described with reference to FIGS. 7A to 7C. The description of this relationship may be equally and/or similarly applied to and understood for the coupling relationship of the fourth adhesive portion (e.g., the fourth adhesive portion 341 of FIGS. 6A and 6B), the second display area (e.g., the second display area 232 of FIG. 4), and the second plate (e.g., the second plate 222 of FIGS. 4, 6A, and 6B).

Referring to FIGS. 7A to 7C, the first plate 212 may include a first front surface 212a facing the first display area 231 and a first rear surface 212b opposite to the first front surface 212a.

According to an embodiment, the second adhesive portion 321 may be disposed between the first front surface 212a and the first display area 231. The second adhesive portion 321 may be elongated. For example, the second adhesive portion 321 may extend linearly.

According to an embodiment, the second adhesive portion 321 may be adhered to the first display area 231 and the first front surface 212a to fix the first display area 231 to the first front surface 212a of the first plate 212. For example, one surface 321a of the second adhesive portion 321 may be adhered to an inner surface of the first display area 231, and the other surface 321b of the second adhesive portion 321 opposite to the one surface 321a may be adhered to the first front surface 212a. The fixing force between the first display area 231 and the first plate 212 may be defined by the length L2 of the second adhesive portion 321 or the adhesive material of the second adhesive portion 321. For example, to enhance or improve the fixing force, it may be advantageous for the second adhesive portion 321 to have a relatively long length.

According to an embodiment, the second adhesive portion 321 may be adhered to the inner surface (e.g., the surface oriented in the -Z direction in FIGS. 7A to 7C) of the first display area 231. To ensure that the surface of the first display area 231 exposed to the exterior of the electronic device does not have a step difference, the second adhesive portion 321 may extend linearly without a step difference and may support the first display area 231. In other words the second adhesive portion 321 has a substantially uniform thickness (i.e. it is substantially flat).

According to an embodiment, the second adhesive portion 321 may be disposed on a flat portion of the first front surface 212a without being stepped so as to extend linearly without being stepped (i.e. to maintain a uniform thickness. The second adhesive portion 321 may be designed to secure the maximum possible length within the flat portion of the first front surface 212a without being stepped, but is not limited thereto.

Referring to FIG. 7A, the second adhesive portion 321 disposed on the first front surface 212a of the first plate 212 is illustrated. According to an embodiment, other structures 213 may be disposed on the first front surface 212a of the first plate 212. The first plate 212 may include a protrusion 214 extending from the first front surface 212a of the first plate 212.

According to an embodiment, the second adhesive portion 321 may be disposed between the other structures 213 and the protrusion 214, extending linearly without being stepped. A portion of the first display area 231 supported by the second adhesive portion 321 may be/become flat without being stepped, thereby making the surface of the first display area 231 exposed to the exterior flat. In some examples the thickness of the second adhesive portion 321 may be substantially similar to the thickness of the other structures 213 and the protrusion 214.

Referring to FIG. 7B, the second adhesive portion 321 disposed on the first front surface 212a of the first plate 212 is illustrated. According to an embodiment, the first plate 212 may include a recess 215 (or a slit) recessed toward the first rear surface 212b from the first front surface 212a of the first plate 212.

According to an embodiment, the second adhesive portion 321 may be disposed or accommodated within the recess 215, extending linearly without being stepped. A portion of the first display area 231 supported by the second adhesive portion 321 may be/become flat without being stepped, thereby making the surface of the first display area 231 exposed to the exterior flat. In some examples the thickness of the second adhesive portion 321 may be substantially similar to the depth of the recess 215.

Referring to FIG. 7C, the second adhesive portion 321 disposed on the first front surface 212a of the first plate 212 is illustrated. According to an embodiment, the first plate 212 may include a hole 2161 penetrating from the first front surface 212a to the first rear surface 212b of the first plate 212 and a groove 2162 recessed from the first front surface 212a toward the first rear surface 212b.

According to an embodiment, the second adhesive portion 321 may be disposed so as not to overlap the hole 2161 and the groove 2162, thereby extending linearly without being stepped. A portion of the first display area 231 supported by the second adhesive portion 321 may be/become flat without being stepped, thereby making the surface of the first display area 231 exposed to the exterior flat.

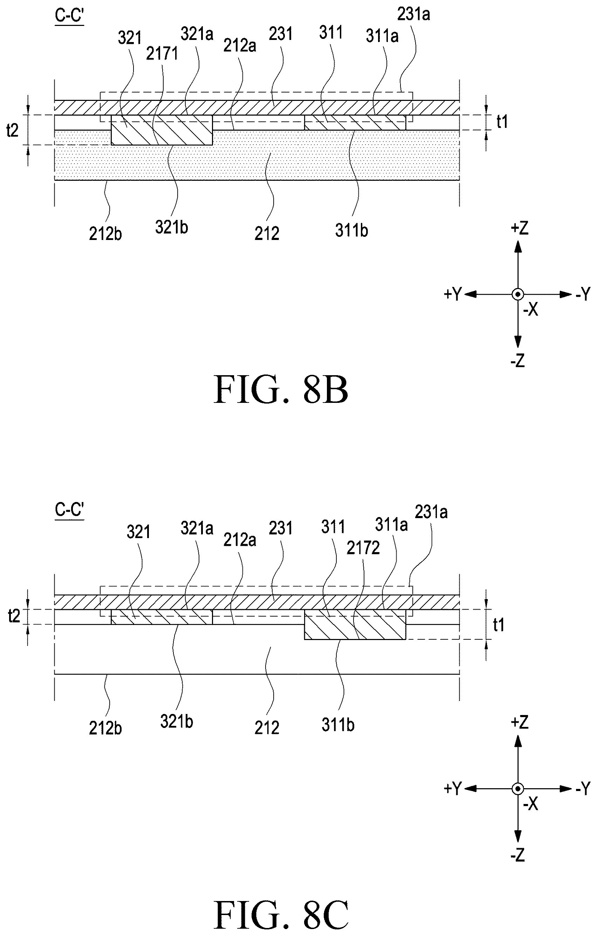

FIGS. 8A, 8B, and 8C are cross-sectional views taken along line C-C' of FIG. 6A, according to an embodiment of the disclosure.

The embodiments of FIGS. 8A to 8C may be combined with the embodiments of FIGS. 1 to 7C or the embodiments of FIGS. 9 to 16.

The configurations of the embodiments of FIGS. 8A to 8C may be partially or entirely the same as the configurations of the embodiments of FIGS. 1 to 7C or the configurations of the embodiments of FIGS. 9 to 16.

Hereinafter, the coupling relationship of the first adhesive portion 311, the second adhesive portion 321, the first display area 231, and the first plate 212 will be described with reference to FIGS. 7A to 8C. The description of this relationship may be equally and/or similarly applied to and understood for the coupling relationship of the third adhesive portion (e.g., the third adhesive portion 331 of FIGS. 6A and 6B), the fourth adhesive portion (e.g., the fourth adhesive portion 341 of FIGS. 6A and 6B), the second display area (e.g., the second display area 232 of FIG. 4), and the second plate (e.g., the second plate 222 of FIGS. 4, 6A, and 6B).

Referring to FIGS. 8A to 8C, the first plate 212 may include a first front surface 212a facing the first display area 231 and a first rear surface 212b opposite to the first front surface 212a.

According to an embodiment, the first adhesive portion 311 and the second adhesive portion 321 may be positioned in a first portion 231a of the first display area 231. The first portion 231a of the first display area 231 may be defined as a portion adjacent to the folding area (e.g., the folding area 233 of FIG. 4).

According to an embodiment, the first surface 311a of the first adhesive portion 311 adhered to the first portion 231a of the first display area 231 and the first surface 321a of the second adhesive portion 321 adhered to the first portion 231a of the first display area 231 may be positioned on the same plane. Accordingly, the first portion 231a supported by the first surface 311a and the second surface 321a may be/become flat without being stepped.

According to an embodiment, the surface 311b of the first adhesive portion 311 opposite to the first surface 311a may be adhered to the first front surface 212a. The surface 321b of the second adhesive portion 321 opposite to the first surface 321a may be adhered to the first front surface 212a.

According to an embodiment, the thickness t1 (e.g., the thickness in the Z-axis direction in FIGS. 8A to 8C) of the first adhesive portion 311 may be defined as the thickness between the first surface 311a and the opposite surface 311b, and the thickness t2 of the second adhesive portion 321 may be defined as the thickness between the second surface 321a and the opposite surface 321b.

According to an embodiment, based on the first surface 311a and the second surface 321a being positioned on the same plane (i.e. same level/flat), the thickness t1 of the first adhesive portion 311 and the thickness t2 of the second adhesive portion 321 may be variously modified in design.

Referring to FIG. 8A, the thickness t1 of the first adhesive portion 311 may be substantially the same as the thickness t2 of the second adhesive portion 321.

Referring to FIG. 8B, the first plate 212 may include a recess 2171 recessed toward the second front surface 212b from the first front surface 212a (e.g., the recess 215 of FIG. 7B). The second adhesive portion 321 may be disposed in the recess 2171. The first adhesive portion 311 may be disposed in an area where no recess is formed. According to an embodiment, the first surface 311a of the first adhesive portion 311 adhered to the first portion 231a of the first display area 231 and the first surface 321a of the second adhesive portion 321 adhered to the first portion 231a of the first display area 231 may be positioned on substantially the same plane. Accordingly, the first portion 231a supported by the first surface 311a and the second surface 321a may be/become flat without being stepped. The thickness t1 of the first adhesive portion 311 may be smaller than the thickness t2 of the second adhesive portion 321.

Referring to FIG. 8C, the first plate 212 may include a recess 2172 recessed toward the second front surface 212b from the first front surface 212a. The first adhesive portion 311 may be disposed in the recess 2172. The second adhesive portion 321 may be disposed in an area where no recess is formed. According to an embodiment, the first surface 311a of the first adhesive portion 311 adhered to the first portion 231a of the first display area 231 and the first surface 321a of the second adhesive portion 321 adhered to the first portion 231a of the first display area 231 may be positioned on substantially the same plane. Accordingly, the first portion 231a supported by the first surface 311a and the second surface 321a may be/become flat without being stepped. The thickness t1 of the first adhesive portion 311 may be greater than the thickness t2 of the second adhesive portion 321.

FIG. 9 is a cross-sectional view of the electronic device taken along line D-D' of FIG. 3, according to an embodiment of the disclosure. FIG. 10 is an enlarged view of portion E of FIG. 9 according to an embodiment of the disclosure.

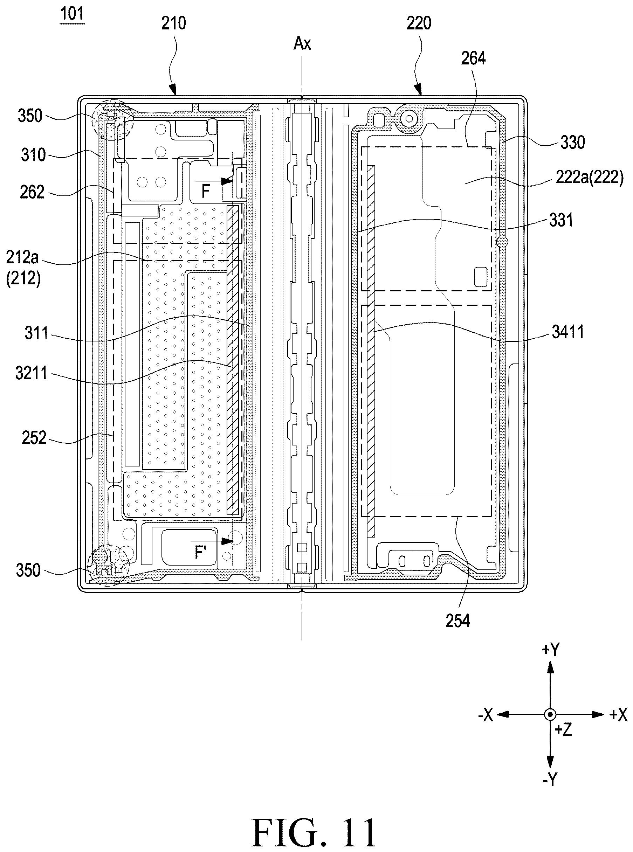

The embodiments of FIGS. 9 and 10 may be combined with the embodiments of FIGS. 1 to 8C or the embodiments of FIGS. 11 to 16.

The configurations of the embodiments of FIGS. 9 and 10 may be partially or entirely the same as the configurations of the embodiments of FIGS. 1 to 8C or the embodiments of FIGS. 11 to 16.

Referring to FIGS. 9 and 10, the electronic device 101 may include a flexible display 230 (e.g., the flexible display 230 of FIG. 4).

According to an embodiment, the flexible display 230 may include a first display area 231 disposed on the first front surface 212a of the first plate 212 of the first housing 210, a second display area 232 disposed on the second front surface 222a of the second plate 222 of the second housing 220, and a folding area 233 configured to be at least partially folded or unfolded.

According to an embodiment, the folding area 233 may be located corresponding to the hinge 202. The reference numeral 202a may indicate a hinge bracket of the hinge 202. The hinge 202 may be covered by a hinge cover 240. Although not illustrated, the hinge 202 may include a first hinge element and a second hinge element, which are rotatably connected to the hinge bracket 202a and are connected to the first housing 210 and the second housing 220, respectively.

According to an embodiment, when the electronic device 101 is folded (e.g., FIG. 3 or FIG. 9), the folding area 233 may be folded. The folding area 233 may form a predetermined curvature and may form a curved surface.

According to an embodiment, the first display area 231 may extend from the folding area 233. The reference numeral 230a may indicate a boundary between the folding area 233 and the first display area 231.

According to an embodiment, the second display area 232 may extend from the folding area 233. The reference numeral 230b may indicate a boundary between the folding area 233 and the second display area 232.

According to an embodiment, when the folding area 233 is folded (e.g., when the electronic device 101 is in the folded state), the first display area 231 and the second display area 232 may be configured to face each other, and a gap g1 may be formed therebetween.

According to an embodiment, the first adhesive portion 311 and the second adhesive portion 321 may be positioned in a first portion 231a of the first display area 231 adjacent to the folding area 233.

According to an embodiment, the third adhesive portion 331 and the fourth adhesive portion 341 may be positioned in a second portion 232a of the second display area 232 adjacent to the folding area 233.

According to an embodiment, when the folding area 233 is folded, the first portion 231a and the second portion 232a may face each other so as to be correspondingly positioned.

According to an embodiment, the gap g1 may be formed between the first display area 231 and the second display area 232, thereby preventing and/or reducing dents on the surfaces of the display areas 231 and 232 caused by foreign substances.

According to an embodiment, as the folding area 233 is folded, a reaction force R1 may be generated in the first portion 231a of the first display area 231 adjacent to the folding area 233. The reaction force R1 may be generated in the first portion 231a in a direction that lifts the first portion 231a away from the first plate 212 (e.g., the +Z direction in FIG. 10) or in a direction toward the second portion 232a. When the first display area 231 is lifted away from the first plate 212, the size of the gap g1 formed between the first display area 231 and the second display area 232 may decrease, for example, to g2. The reaction force R1 may also be defined and/or referred to as a force, lifting force, a de-adhesion force, or display deformation force.

According to an embodiment, the first adhesive portion 311 and the second adhesive portion 321 may be disposed between the first portion 231a and the first plate 212. The second adhesive portion 321 may be disposed adjacent to the first adhesive portion 311.

According to an embodiment, the first adhesive portion 311 and the second adhesive portion 321 may at least partially offset the reaction force R1 generated in the first portion 231a of the first display area 231. For example, when the second adhesive portion 321 is not present, it may be difficult for the first adhesive portion 311, which forms at least a portion of the first waterproofing member 310, to offset the reaction force R1 alone, thereby causing the first portion 231a to lift away from the first plate 212, which may cause damage to, or creasing of the display both of which it is desirable to avoid. In other words, the combined adhesive force of the first adhesive portion 311 and the second adhesive portion 321 may fully or partially prevent the first portion 231a lifting away from the first plate 212 when the display/electronic device is folded. In an embodiment, when the folding area (233) is folded, the second adhesive portion (321) together with the first adhesive portion (311) are configured to resist lifting of the first portion (231a) of the first area (231) away from the first surface of the first housing (210, 212).

According to an embodiment, when the second adhesive portion 321 is disposed adjacent to the first adhesive portion 311, the reaction force R1 generated in the first portion 231a may be at least partially offset by the first adhesive portion 311 and the second adhesive portion 321. For example, as the two adhesive portions are adhered to the first portion 231a and the first plate 212, the reaction force R1 generated in the first portion 231a may be at least partially offset by the fixing force provided by the two adhesive portions. For example, the second adhesive portion 321, together with the first adhesive portion 311, may be configured to at least partially offset the reaction force generated in the first portion 231a of the first display area 231 toward the second portion 232a. Accordingly, the lifting of the first portion 231a away from the first plate 212 may be reduced, limited, and/or prevented, and excessive reduction of the gap g1 may be limited. As explained below, similar applies to the second portion 232a of the second display area 232, albeit with respect to force R2.

According to an embodiment, as the folding area 233 is folded, a reaction force R2 may be generated in the second portion 232a of the second display area 232 adjacent to the folding area 233. The reaction force R2 may be generated in the second portion 232a in a direction that lifts the second portion 232a away from the second plate 222 (e.g., the -Z direction in FIG. 10) or in a direction toward the first portion 231a. When the second display area 232 is lifted away from the second plate 222, the size of the gap g1 formed between the second display area 232 and the second display area 232 may decrease, for example, to g2. The reaction force R2 may also be defined and/or referred to as a force.

According to an embodiment, the third adhesive portion 331 and the fourth adhesive portion 341 may be disposed between the second portion 232a and the second plate 222. The fourth adhesive portion 341 may be disposed adjacent to the third adhesive portion 331.

According to an embodiment, the third adhesive portion 331 and the fourth adhesive portion 341 may at least partially offset the reaction force R2 generated in the second portion 232a of the second display area 232. For example, when the second adhesive portion is not present, it may be difficult for the third adhesive portion 331, which forms at least a portion of the second waterproofing member 330, to offset the reaction force R2 alone, thereby causing the second portion 232a to lift away from the second plate 222.

According to an embodiment, when the fourth adhesive portion 341 is disposed adjacent to the third adhesive portion 331, the reaction force R2 generated in the second portion 232a may be at least partially offset by the third adhesive portion 331 and the fourth adhesive portion 341. For example, as the two adhesive portions are adhered to the second portion 232a and the second plate 222, the reaction force R2 generated in the second portion 232a may be at least partially offset by the fixing force provided by the two adhesive portions. For example, the fourth adhesive portion 341, together with the third adhesive portion 331, may be configured to at least partially offset the reaction force generated in the second portion 232a of the second display area 232 toward the first portion 231a. Accordingly, the lifting of the second portion 232a away from the second plate 222 may be reduced, limited, and/or prevented, and excessive reduction of the gap g1 may be limited. In an embodiment, when the folding area (233) is folded, the fourth adhesive portion (341) together with the third adhesive portion (331) are configured to resist lifting of the second portion (232a) of the second area (232) away from the second surface (222a) of the second housing (220, 222).

Although the forces (e.g., reaction forces R1/R2) may be exerted during all folding movements, the lifting of the first/second portions 231a/232a from the first/second plates 212/222 when only the first/third adhesive portions 311/331 are present may occur after the display has been subjected to a repeated folding and unfolding, for example, due to the adhesive force of the first/third adhesive portions 311/331 reducing over time and/or the cumulative stress place on the first/second portions 231a/232a and/or the first/third adhesive portions 311/331.

According to an embodiment, when the folding area 233 is folded, the first adhesive portion 311 may be located corresponding to (i.e. facing but with elements in between) the third adhesive portion 331, and the second adhesive portion 321 may be located corresponding to (i.e. facing but with elements in between) the fourth adhesive portion 341.

According to an embodiment, the width S11 of the first adhesive portion 311 may be substantially the same as the width S21 of the third adhesive portion 331, but is not limited thereto. For example, the width S11 of the first adhesive portion 311 may be different from the width S21 of the third adhesive portion 331.

According to an embodiment, the width S12 of the second adhesive portion 321 may be substantially the same as the width S22 of the fourth adhesive portion 341, but is not limited thereto. For example, the width S12 of the second adhesive portion 321 may be different from the width S22 of the second adhesive portion 341.

According to an embodiment, the width S12 of the second adhesive portion 321 may be substantially the same as the width S11 of the first adhesive portion 311, but is not limited thereto. For example, the width S12 of the second adhesive portion 321 may be about 0.8 times to about 1.2 times the width S11 of the first adhesive portion 311. For example, the width S12 of the second adhesive portion 321 may be about 0.9 times to about 1.1 times the width S11 of the first adhesive portion 311.

According to an embodiment, the width S22 of the fourth adhesive portion 341 may be substantially the same as the width S21 of the third adhesive portion 331, but is not limited thereto. For example, the width S22 of the fourth adhesive portion 341 may be about 0.8 times to about 1.2 times the width S21 of the third adhesive portion 331. For example, the width S22 of the fourth adhesive portion 341 may be about 0.9 times to about 1.1 times the width S21 of the third adhesive portion 331.

According to an embodiment, the second adhesive portion 321 may be spaced apart from the first adhesive portion 311 by a first distance S13. The first distance S13 may have a size of about 0.03 times to about 0.07 times the first width (e.g., the first width w1 of FIG. 6A) of the first housing (e.g., the first housing 210 of FIG. 6A). For example, the first distance S13 may have a size of about 0.045 times to about 0.055 times the first width of the first housing. For example, the first distance S13 may have a size of about 0.05 times the first width of the first housing.

According to an embodiment, the fourth adhesive portion 341 may be spaced apart from the third adhesive portion 331 by a second distance S23. The second distance S23 may have a size of about 0.03 times to about 0.07 times the second width (e.g., the second width w2 of FIG. 6A) of the second housing (e.g., the second housing 220 of FIG. 6A). For example, the second distance S23 may have a size of about 0.045 times to about 0.055 times the second width of the second housing. For example, the second distance S23 may have a size of about 0.05 times the second width of the second housing.

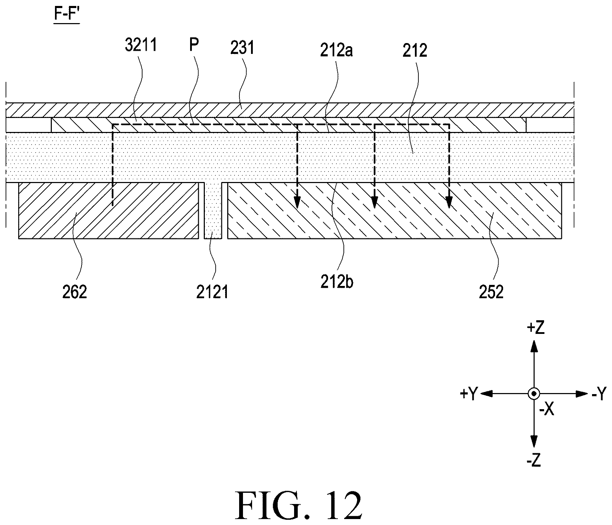

FIG. 11 is a plan view of an electronic device according to an embodiment of the disclosure. FIG. 12 is a cross-sectional view taken along line F-F' of FIG. 11, according to an embodiment of the disclosure.

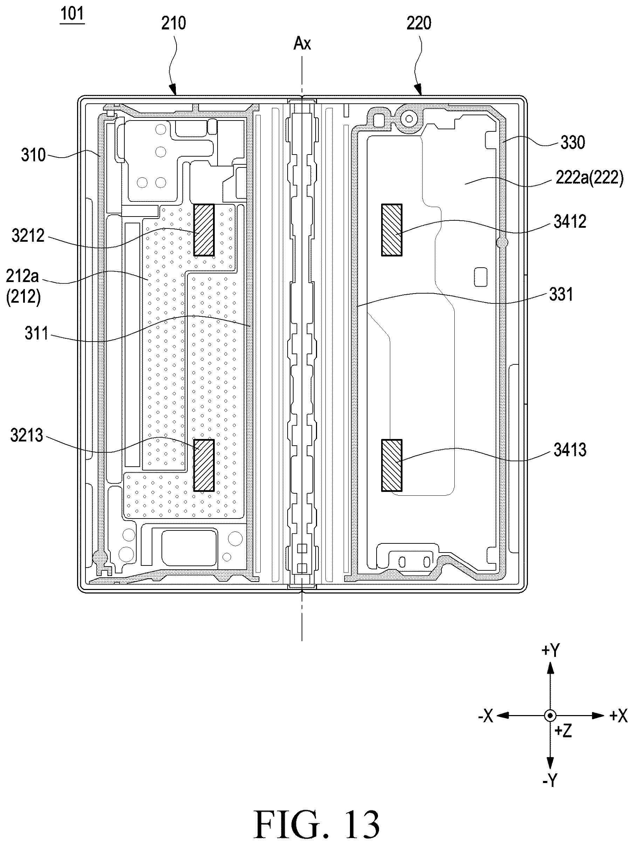

The embodiments of FIGS. 11 and 12 may be combined with the embodiments of FIGS. 1 to 10 or the embodiments of FIGS. 13 to 16.

The configurations of the embodiments of FIGS. 11 and 12 may be partially or entirely the same as the configurations of the embodiments of FIGS. 1 to 10 or the embodiments of FIGS. 13 to 16.

Referring to FIGS. 11 and 12, an electronic device 101 may include a first battery 252 (e.g., the first battery 252 of FIG. 4), a first circuit board 262 (e.g., the first circuit board 262 of FIG. 4), a second battery 254 (e.g., the second battery 254 of FIG. 4), and a second circuit board 264 (e.g., the second circuit board 264 of FIG. 4).

Referring to FIG. 11, the second adhesive portion 3211 (e.g., the second adhesive portion 321 of FIGS. 6A and 6B) may be disposed on the first front surface 212a of the first plate 212. For example, the first battery 252 and the first circuit board 262 may be disposed on the first rear surface 212b of the first plate 212.

According to an embodiment, the fourth adhesive portion 3411 (e.g., the fourth adhesive portion 341 of FIGS. 6A and 6B) may be disposed on the second front surface 222a of the second plate 222. For example, the second battery 254 and the second circuit board 264 may be disposed on the second rear surface of the second plate 222 (e.g., the surface oriented in the -Z direction of FIG. 4).

According to an embodiment, the second adhesive portion 3211 and the fourth adhesive portion 3411 may include a tape having thermal conductivity.

According to an embodiment, the first waterproofing member 310 may have an overall loop shape. A portion of the first waterproofing member 310 may be cut and may not be connected. As a waterproofing material 350 (e.g., a cure-in-place gasket (CIPG)) is filled in the portion where the first waterproofing member 310 is cut and not connected, the first waterproofing member 310 may form a waterproofing area. For example, the cut and unconnected portion(s) of the first waterproofing member 310 may be connected by the waterproofing material 350, thereby forming a waterproofing area inside the first waterproofing member 310.

Hereinafter, taking the second adhesive portion 3211 as an example, the arrangement relationship of the second adhesive portion 3211, the first battery 252, and the first circuit board 262 will be described. The description herein may be applied to and understood as the arrangement relationship of the fourth adhesive portion 3411, the second battery 254, and the second circuit board 264.

Referring to FIG. 12, the second adhesive portion 3211 may be disposed on the first front surface 212a of the first plate 212. For example, the first battery 252 and the first circuit board 262 may be disposed on the first rear surface 212b of the first plate 212.

According to an embodiment, the first plate 212 may include a battery wall 2121. The battery wall 2121 may protrude from the first rear surface 212b of the first plate 212. The battery wall 2121 may be disposed between the first circuit board 262 and the first battery 252.

According to an embodiment, the second adhesive portion 3211 may be elongated to overlap the first battery 252 from the first circuit board 262. Accordingly, at least some heat generated from the first circuit board 262 and at least one electrical component disposed on the first circuit board 262 may be transferred to the first adhesive portion 3211 through the first plate 212. The heat may be transferred to at least a portion of the first plate 212 corresponding to the first battery 252 through the second adhesive portion 3211. The heat may be transferred from at least a portion of the first plate 212 to the first battery 252.

According to an embodiment, the second adhesive portion 3211 and the first plate 212 may form at least a portion of a heat dissipation path P for dissipating heat generated from the first circuit board 262.

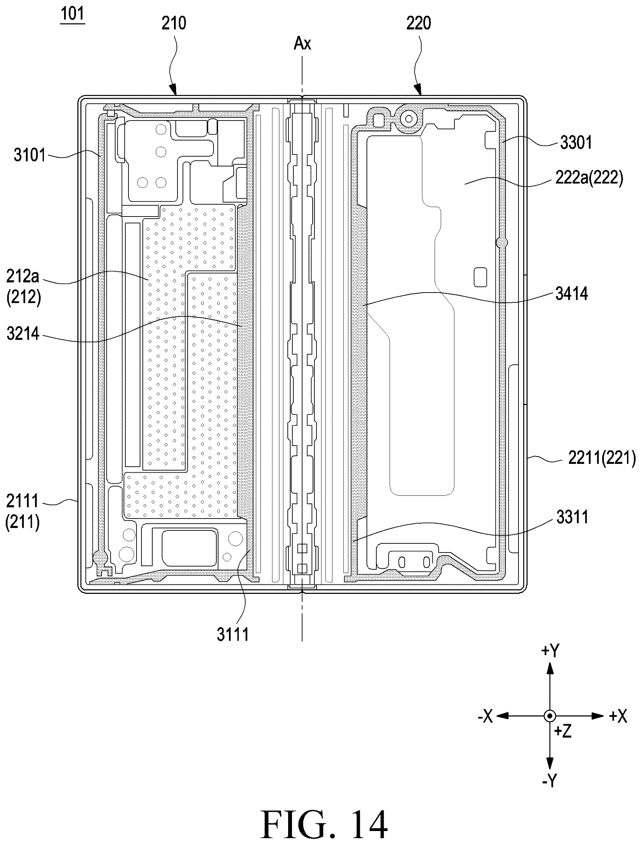

FIG. 13 is a plan view of an electronic device according to an embodiment of the disclosure. FIG. 14 is a plan view of an electronic device according to an embodiment of the disclosure.

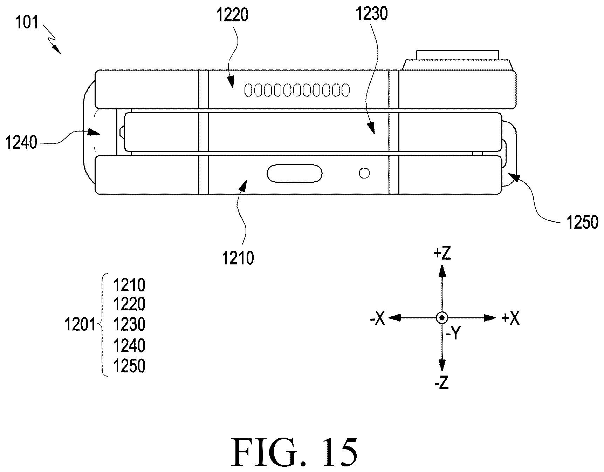

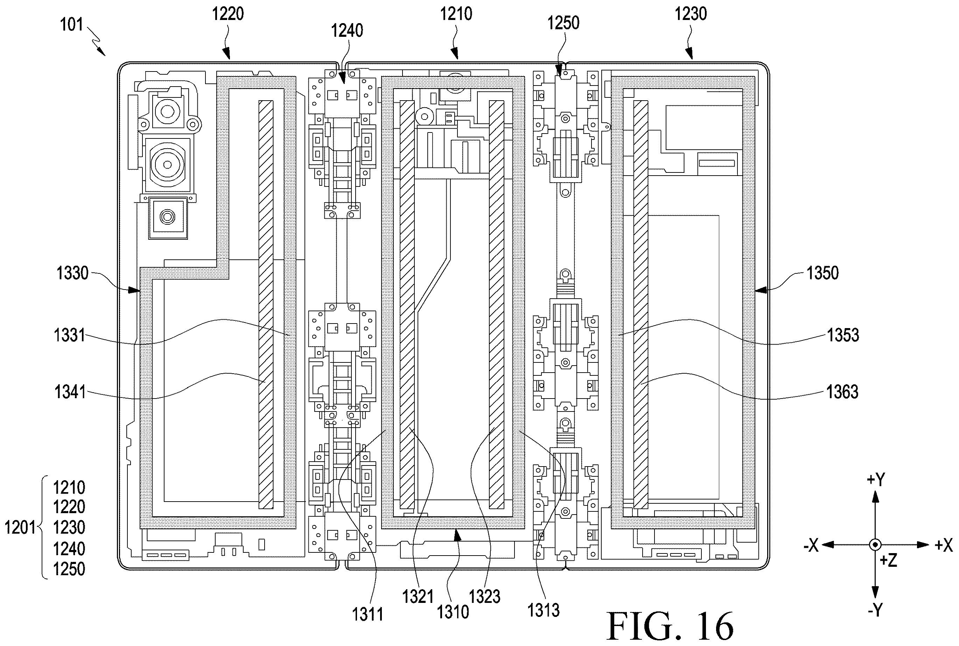

The embodiments of FIGS. 13 and 14 may be combined with the embodiments of FIGS. 1 to 12 or the embodiments of FIGS. 15 and 16.

The configurations of the embodiments of FIGS. 13 and 14 may be partially or entirely the same as the configurations of the embodiments of FIGS. 1 to 12 or the embodiments of FIGS. 15 and 16.

Referring to FIG. 13, the second adhesive portion (e.g., the second adhesive portion 321 of FIGS. 6A and 6B) may include a plurality of second adhesive areas 3212 and 3213 that are spaced apart from each other. In the illustrated embodiment, the second adhesive portion may include two second adhesive areas 3212 and 3213, but is not limited thereto. For example, the second adhesive portion may include three or more second adhesive areas that are spaced apart from each other. The adhesive material of the second adhesive areas 3212 and 3213 may be different from the adhesive material of the first adhesive portion 311. For example, the second adhesive areas 3212 and 3213 may have an adhesive material with a higher adhesive strength than the adhesive material of the first adhesive portion 311. For example, the second adhesive areas 3212 and 3213 may include at least one of acrylic foam tape, epoxy tape, and polyethylene (PE) foam tape.

According to an embodiment, the fourth adhesive portion (e.g., the fourth adhesive portion 341 of FIGS. 6A and 6B) may include a plurality of fourth adhesive areas 3412 and 3413 that are spaced apart from each other. The adhesive material of the fourth adhesive areas 3412 and 3413 may be different from the adhesive material of the third adhesive portion 331. For example, the fourth adhesive areas 3412 and 3413 may have an adhesive material with a higher adhesive strength than the adhesive material of the third adhesive portion 331. For example, the fourth adhesive areas 3412 and 3413 may include at least one of acrylic foam tape, epoxy tape, and polyethylene (PE) foam tape.

Referring to FIG. 14, in an embodiment, the second adhesive portion 3214 (e.g., the second adhesive portion 321 of FIGS. 6A and 6B) may be integrated with the first adhesive portion 3111 (e.g., the first adhesive portion 311 of FIGS. 6A and 6B). The second adhesive portion 3214 may protrude from the first adhesive portion 3111 in a direction away from the folding axis Ax. For example, the thickness or width of a portion of the first adhesive portion 3111 where the second adhesive portion 3214 is formed may be greater than the thickness or width of another portion of the first adhesive portion 3111 where the second adhesive portion 3214 is not formed.

According to an embodiment, the fourth adhesive portion 3414 (e.g., the fourth adhesive portion 341 of FIGS. 6A and 6B) may be integrated with the third adhesive portion 3311 (e.g., the third adhesive portion 331 of FIGS. 6A and 6B). The fourth adhesive portion 3414 may protrude from the third adhesive portion 3311 in a direction away from the folding axis Ax. For example, the thickness or width of a portion of the third adhesive portion 3311 where the fourth adhesive portion 3414 is formed may be greater than the thickness or width of another portion of the third adhesive portion 3311 where the fourth adhesive portion 3414 is not formed.

FIG. 15 is a side view of the foldable electronic device according to an embodiment of the disclosure. FIG. 16 is a plan view illustrating the interior of a foldable electronic device according to an embodiment of the disclosure.

The embodiments of FIGS. 15 and 16 may be combined with the embodiments of FIGS. 1 to 14.

The configurations of the embodiments of FIGS. 15 and 16 may be partially or entirely the same as the configurations of the embodiments of FIGS. 1 to 14.

The X-axis, Y-axis, and Z-axis of the Cartesian coordinate system illustrated in FIGS. 15 and 16 are illustrated based on the first housing 1210, but the present disclosure is not limited thereto.

Referring to FIGS. 15 and 16, an electronic device 101 (e.g., the electronic device 101 of FIGS. 2 to 14) may include a foldable housing 1201.

According to an embodiment, the foldable housing 1201 may include a first housing 1210, a second housing 1220, a third housing 1230, a first hinge 1240, and a second hinge 1250.

According to an embodiment, the first hinge 1240 may be connected to one side of the first housing 1210 and the second housing 1220. For example, the first housing 1210 and the second housing 1220 may be rotatably connected to each other via the first hinge 1240.

According to an embodiment, the second hinge 1250 may be connected to the other side of the first housing 1210 and the third housing 1230. For example, the first housing 1210 and the third housing 1230 may be rotatably connected to each other via the second hinge 1250.

According to an embodiment, when the electronic device 101 is in the fully folded state (e.g., FIG. 15), the third housing 1230 may be disposed at least partially between the first housing 1210 and the second housing 1220.

According to an embodiment, when the electronic device 101 is in the fully unfolded state (e.g., FIG. 16), the first housing 1210 may be disposed between the second housing 1220 and the third housing 1230.

According to an embodiment, the electronic device 101 may further include a flexible display (e.g., the flexible display 230 of FIGS. 2 to 4).

According to an embodiment, the flexible display may include a first display area supported by the first housing 1210, a second display area supported by the second housing 1220, and a third display area supported by the third housing 1230. According to an embodiment, the flexible display may include a first folding area connected to the first display area and the second display area and configured to be at least partially folded or unfolded. According to an embodiment, the flexible display may include a second folding area connected to the second display area and the third display area and configured to be at least partially folded or unfolded.

According to an embodiment, the electronic device 101 may include a first waterproofing member 1310, a second waterproofing member 1330, and a third waterproofing member 1350. The first waterproofing member 1310 may be disposed between the first display area and the first housing 1210. The second waterproofing member 1330 may be disposed between the second display area and the second housing 1220. The third waterproofing member 1350 may be disposed between the third display area and the third housing 1230.

According to an embodiment, the first waterproofing member 1310 may include a first adhesive portion 1311 disposed adjacent to the first hinge 1240. The second waterproofing member 1330 may include a third adhesive portion 1331 disposed adjacent to the first hinge 1240.

According to an embodiment, the electronic device 101 may include a second adhesive portion 1321 disposed adjacent to the first adhesive portion 1311. When the first folding area is folded, the second adhesive portion 1321 may be configured to at least partially offset a reaction force generated in at least a portion of the first display area adjacent to the first folding area, together with the first adhesive portion 1311.

According to an embodiment, the electronic device 101 may include a fourth adhesive portion 1341 disposed adjacent to the third adhesive portion 1331. When the first folding area is folded, the fourth adhesive portion 1341 may be configured to at least partially offset a reaction force generated in at least a portion of the second display area adjacent to the first folding area, together with the third adhesive portion 1331.

According to an embodiment, the first waterproofing member 1310 may include a fifth adhesive portion 1313 disposed adjacent to the second hinge 1250. The third waterproofing member 1350 may include a seventh adhesive portion 1353 disposed adjacent to the second hinge 1250.

According to an embodiment, the electronic device 101 may include a sixth adhesive portion 1323 disposed adjacent to the fifth adhesive portion 1313. When the second folding area is folded, the sixth adhesive portion 1323 may be configured to at least partially offset a reaction force generated in at least a portion of the first display area adjacent to the second folding area, together with the fifth adhesive portion 1313.

According to an embodiment, the electronic device 101 may include an eighth adhesive portion 1363 disposed adjacent to the seventh adhesive portion 1353. When the second folding area is folded, the eighth adhesive portion 1363 may be configured to at least partially offset a reaction force generated in at least a portion of the third display area adjacent to the second folding area, together with the seventh adhesive portion 1353.

According to an embodiment, the first waterproofing member 1310, the second waterproofing member 1330, the third waterproofing member 1350, the second adhesive portion 1321, the fourth adhesive portion 1341, the sixth adhesive portion 1323, and the eighth adhesive portion 1363 may each include waterproofing tape, but are not limited thereto.

The electronic device 101 described with reference to FIGS. 2 to 16 has been described as including two housings and one hinge or three housings and two hinges as examples. However, the disclosure is not limited thereto. For example, the descriptions of the electronic device 101, waterproofing members, adhesive portions, and flexible display given with reference to FIGS. 2 to 16 may be equally and/or similarly applied and/or adapted to an electronic device including four or more housings and three or more hinges.

A foldable electronic device including a flexible display may include a hinge structure that enables multiple housings to rotate relative to each other. A portion (e.g., a folding area) of the flexible display may be located corresponding to the hinge structure so as to be at least partially folded or unfolded as the multiple housings are folded or unfolded.

The flexible display may include planar areas extending from the folding area. The planar areas may be configured to face each other when the multiple housings are in the folded state.

To prevent the planar areas from colliding with each other or from being dented due to foreign substances therebetween, a gap may be required between the planar areas when the multiple housings are in the folded state.

However, as a folding area is folded, a reaction force may be generated in the portions of the planar areas adjacent to the folding area. Due to this reaction force, the planar areas may lift away from the housings, making it difficult to sufficiently secure the required gap size.

According to an embodiment of the disclosure, a foldable electronic device may be provided, which is configured to reduce the magnitude of the reaction force generated in the planar areas of the flexible display due to the folding of the flexible display when the foldable electronic device is in the folded state.

However, the problems intended to be solved by the disclosure are not limited to those mentioned above and may be variously expanded without departing from the spirit and scope of the disclosure.

An embodiment of the disclosure may provide a foldable electronic device which ensures that the size of a gap formed between the planar areas of a flexible display facing each other is maintained when the foldable electronic device is in the folded state.

An embodiment of the disclosure may provide adhesive portions preventing direct contact between planar areas located adjacent to a folding area and configured to face each other, as well as a foldable electronic device including such adhesive portions.

The effects that are capable of being obtained by the disclosure are not limited to those described above, and other effects not described above may be clearly understood by a person ordinarily skilled in the art to which the disclosure belongs based on the following description.

According to an embodiment of the disclosure, a foldable electronic device 101 may include a foldable housing 201 including a first housing 210 or 212, a second housing 220 or 222, and a hinge 202 rotatably coupled to the first housing 210 or 212 and the second housing 220 or 222.

According to an embodiment, the foldable electronic device 101 may include a flexible display 230 including a first area 231 supported by the first housing 210 or 212, a second area 232 supported by the second housing 220 or 222, and a folding area 233 connected to the first area 231 and the second area 232, the folding area 233 of the flexible display 230 being configured to be at least partially folded or unfolded based on a rotation of the second housing 220 or 222) with respect to the first housing 210 or 212.

According to an embodiment, the foldable electronic device 101 may include a first adhesive portion 311 including an adhesive material, adhered to a first surface 212a of the first housing 210 or 212 and the first area 231, and disposed substantially parallel to a folding axis Ax defined by the hinge 202.

According to an embodiment, the foldable electronic device 101 may include a second adhesive portion 321 including an adhesive material, adhered to the first surface 212a of the first housing 210 or 212 and the first area 231, and disposed substantially parallel to the first adhesive portion 311.

According to an embodiment, the first adhesive portion 311 and the second adhesive portion 321 may be disposed on a first portion 231a of the first area 231 adjacent to the folding area 233.

According to an embodiment, the first portion 231a of the first area 231 is configured to face a second portion 232a of the second area 232 adjacent to the folding area 233 with a gap interposed therebetween when the folding area 233 is folded.

According to an embodiment, the second adhesive portion 321 may be configured to at least partially offset a force, which is generated in the first portion 231a of the first area 231 toward the second portion 232a of the second area 232, together with the first adhesive portion 311 when the folding area 233 is folded.

According to an embodiment, the first adhesive portion 311 and the second adhesive portion 321 may be spaced apart from each other and elongated along the folding axis Ax.

According to an embodiment, the first adhesive portion 311 may be at least partially disposed between the folding axis Ax and the second adhesive portion 321.

According to an embodiment, the length of the second adhesive portion 321 may be smaller than the length of the first adhesive portion.

According to an embodiment, the adhesive material of the second adhesive portion 321 may be equal to the adhesive material of the first adhesive portion 311.

According to an embodiment, the width of the second adhesive portion 321 may be substantially equal to the width of the first adhesive portion.

According to an embodiment, the second adhesive portion 321 may be disposed on a flat portion of the first surface 212a of the first housing 210 or 212, such that the second adhesive portion 321 extends linearly without being stepped.

According to an embodiment, a first surface 311a of the first adhesive portion 311, which is adhered to the first portion 231a of the first area 231, and a second surface 321a of the second adhesive portion 321, which is adhered to the first portion 231a of the first area 231, are located substantially on the same plane, such that the first portion 231a of the first display area 231 is flat without being stepped.

According to an embodiment, the thickness of the second adhesive portion 321 may be different from or substantially equal to the thickness of the first adhesive portion 311.

According to an embodiment, the foldable electronic device 101 may further include a circuit board 262 disposed on a second surface 212b of the first housing 210 or 212 opposite to the first surface 212a of the first housing 210 or 212.

According to an embodiment, a battery 252 disposed on the second surface 212b of the first housing 210 or 212 and spaced apart from the circuit board 262 may be further included.

According to an embodiment, the first housing 210 or 212 may include a first plate 212 including the first surface 212a and the second surface 212b.

According to an embodiment, the second adhesive portion 321 may include a tape having a thermal conductivity and extends to be elongated so as to overlap the circuit board 262 and the battery 252 with the first plate 212 interposed therebetween, such that heat generated from the circuit board 262 is transferred to at least a portion of the first plate 212 corresponding to the battery 252, through the second adhesive portion 321.

According to an embodiment, the foldable electronic device 101 may further include a waterproofing member 310 disposed between the first area 231 and the first surface 212a of the first housing 210 or 212 and including a waterproofing material.

According to an embodiment, the first adhesive portion 311 may form at least a portion of the waterproofing member 310.

According to an embodiment, the waterproofing member 310 may extend in a loop shape.

According to an embodiment, the second adhesive portion 321 may be disposed inside the loop shape.

According to an embodiment, the second adhesive portion 321 may include a plurality of second adhesive areas 3212 and 3213 spaced apart from each other.

According to an embodiment, an adhesive material of the plurality of second adhesive areas 3212 and 3213 may be different from the adhesive material of the first adhesive portion 311.

According to an embodiment, the second adhesive portion 3214 may be integrated with the first adhesive portion 3111 and protrude from the first adhesive portion 3111 in a direction away from the folding axis Ax.

According to an embodiment, the foldable electronic device 101 may further include a third adhesive portion 331 including an adhesive material, adhered to a third surface 222a of the second housing 220 or 222 and the second area 232, and disposed substantially parallel to the folding axis Ax.

According to an embodiment, the foldable electronic device 101 may further include a fourth adhesive portion 341 including an adhesive material, adhered to the third surface 222a of the second housing 220 or 222 and the second area 232, and disposed substantially parallel to the fourth adhesive portion 331.

According to an embodiment, the third adhesive portion 331 and the fourth adhesive portion 341 may be disposed on the second portion 232a of the second area 232 adjacent to the folding area 233.

According to an embodiment, the second portion 232a of the second area 232 may be configured to face the first portion 231a of the first area 231 adjacent to the folding area 233 with the gap interposed therebetween when the folding area 233 is folded.

According to an embodiment, the fourth adhesive portion 341 may be configured to at least partially offset a force, which is generated in the second portion 232a of the second area 232 toward the first portion 231a of the first area 231, together with the third adhesive portion 331 when the folding area 233 is folded.

According to an embodiment, when the folding area 233 is folded, the third adhesive portion 331 may be located corresponding to the first adhesive portion 311 and the fourth adhesive portion 341 may be located corresponding to the second adhesive portion 321.

According to an embodiment, the third adhesive portion 331 and the fourth adhesive portion 341 may be spaced apart from each other and elongated along the folding axis Ax.

According to an embodiment, the third adhesive portion 331 may be at least partially disposed between the folding axis Ax and the fourth adhesive portion 341.

According to an embodiment, wherein the length of the fourth adhesive portion 341 may be smaller than the length of the third adhesive portion 331 and greater than the length of the second adhesive portion 321.

According to an embodiment, the foldable electronic device 101 may include a foldable housing 201 including a first housing 210 or 212 and a second housing 220 or 222 rotatably connected to the first housing 210 or 212.

According to an embodiment, the foldable electronic device 101 may include a hinge 202 connected to the first housing 210 or 212 and the second housing 220 or 222 and defining a folding axis Ax.

According to an embodiment, the foldable electronic device 101 may include a flexible display 230 including a first area 231 disposed on a first surface 212a of the first housing 210 or 212, a second area 232 disposed on a third surface 222a of the second housing 220 or 222, and a folding area 233 disposed between the first area 231 and the second area 232.

According to an embodiment, the foldable electronic device 101 may include a first adhesive portion 311 including an adhesive material and adhered to the first surface 212a of the first housing 210 or 212 and the first area 231.

According to an embodiment, the foldable electronic device 101 may include a second adhesive portion 321 including an adhesive material, adhered to the first surface 212a of the first housing 210 or 212 and the first area 231, and disposed adjacent to the first adhesive portion 311.

According to an embodiment, the foldable electronic device 101 may further include a third adhesive portion 331 including an adhesive material and adhered to the third surface 222a of the second housing 220 or 222 and the second area 232.

According to an embodiment, the foldable electronic device 101 may further include a fourth adhesive portion 341 including an adhesive material, adhered to the third surface 222a of the second housing 220 or 222 and the second area 232, and disposed adjacent to the third adhesive portion 331.

According to an embodiment, the second adhesive portion 321 may be elongated along the folding axis Ax.

According to an embodiment, the fourth adhesive portion 341 may be elongated along the folding axis Ax.

According to an embodiment, the length of the second adhesive portion 321 may be different from the length of the fourth adhesive portion 341.

According to an embodiment, the first adhesive portion 311 may be disposed between the second adhesive portion 321 and the folding axis Ax.

According to an embodiment, in the foldable electronic device 101, the third adhesive portion 331 may be disposed between the fourth adhesive portion 341 and the folding axis Ax.

According to an embodiment, the first adhesive portion 311 may be spaced apart from the second adhesive portion 321.

According to an embodiment, the third adhesive portion 331 may be spaced apart from the fourth adhesive portion 341.

According to an embodiment, when the folding area 233 is folded, the first adhesive portion 311 may be located corresponding to the third adhesive portion 331 and the second adhesive portion 321 may be located corresponding to the fourth adhesive portion 341.

In the foregoing detailed description of this document, specific embodiments have been described. However, it will be evident to a person ordinarily skilled in the art that various modifications can be made without departing from the scope of the disclosure.

## Claims

1. A foldable electronic device (101) comprising:
a foldable housing (201) including a first housing (210, 212), a second housing (220, 222), and a hinge (202) rotatably coupling the first housing (210, 212) to the second housing (220, 222);
a flexible display (230) including a first area (231) supported by the first housing (210, 212), a second area (232) supported by the second housing (220, 222) and a folding area (233) connected to the first area (231) and the second area (232), wherein the folding area (233) of the flexible display (230) is configured to be at least partially folded or unfolded based on a rotation of the second housing (220, 222) with respect to the first housing (210, 212);
a first adhesive portion (311) including an adhesive material, adhered to a first surface (212a) of the first housing (210, 212) and the first area (231), and disposed substantially parallel to a folding axis (Ax) defined by the hinge (202); and
a second adhesive portion (321) including an adhesive material, adhered to the first surface (212a) of the first housing (210, 212) and the first area (231), and disposed substantially parallel to the first adhesive portion (311).

2. The foldable electronic device (101) of claim 1,
wherein the first adhesive portion (311) and the second adhesive portion (321) are disposed on a first portion (231a) of the first area (231) adjacent to the folding area (233),
wherein, when the folding area (233) is folded, the first portion (231a) of the first area (231) is configured to face a second portion (232a) of the second area (232) adjacent to the folding area (233) with a gap between the first portion (231a) and the second portion (232a), and
wherein, when the folding area (233) is folded, the second adhesive portion (321) together with the first adhesive portion (311) are configured to resist lifting of the first portion (231a) of the first area (231) away from the first surface (212a) of the first housing (210, 212).

3. The foldable electronic device (101) of claims 1 or 2, wherein the first adhesive portion (311) and the second adhesive portion (321) are spaced apart from each other and elongated along the folding axis (Ax),
wherein the first adhesive portion (311) is at least partially disposed between the folding axis (Ax) and the second adhesive portion (321),
wherein a length of the second adhesive portion (321) is smaller than a length of the first adhesive portion (311),
wherein the adhesive material of the second adhesive portion (321) is the same as the adhesive material of the first adhesive portion (311), and
wherein a width of the second adhesive portion (321) is substantially equal to a width of the first adhesive portion (311).

4. The foldable electronic device (101) of claims 1 or 2, wherein the second adhesive portion (3214) is integrally formed with the first adhesive portion (3111) and protrudes from the first adhesive portion (3111) in a direction away from the folding axis (Ax).

5. The foldable electronic device (101) of any one of claims 1 to 4, wherein the second adhesive portion (321) is substantially flat.

6. The foldable electronic device (101) of any one of claims 1 to 5, wherein a first surface (311a) of the first adhesive portion (311), which is adhered to the first portion (231a) of the first area (231), and a second surface (321a) of the second adhesive portion (321), which is adhered to the first portion (231a) of the first area (231), are located substantially on a same plane.

7. The foldable electronic device (101) of any one of claims 1 to 6, wherein a thickness of the second adhesive portion (321) is different from or substantially equal to a thickness of the first adhesive portion (311).

8. The foldable electronic device (101) of any one of claims 1 to 7, further comprising:
a circuit board (262) disposed on a second surface (212b) of the first housing (210, 212) opposite to the first surface (212a) of the first housing (210, 212); and
a battery (252) disposed on the second surface (212b) of the first housing (210, 212) and spaced apart from the circuit board (262),
wherein the housing (210, 212) includes a first plate (212) including the first surface (212a) and the second surface (212b), and
wherein the second adhesive portion (321) includes a tape having a thermal conductivity and extends substantially parallel to the folding axis so as to overlap the circuit board (262) and the battery (252) with the first plate (212) interposed therebetween, such that heat generated from the circuit board (262) is transferred to at least a portion of the first plate (212) corresponding to the battery (252), through the second adhesive portion (321).

9. The foldable electronic device (101) of any one of claims 1 to 8, further comprising a waterproofing member (310) disposed between the first area (231) and the first surface (212a) of the first housing (210, 212) and including a waterproofing material,
wherein the first adhesive portion (311) forms at least a portion of the waterproofing member (310).

10. The foldable electronic device (101) of claim 9, wherein the waterproofing member (310) extends in a loop shape, and
wherein the second adhesive portion (321) is disposed inside the loop shape.

11. The foldable electronic device (101) of any one of claims 1 to 10, wherein the second adhesive portion (321) includes a plurality of second adhesive areas (3212, 3213) spaced apart from each other, and
wherein an adhesive material of the plurality of second adhesive areas (3212, 3213) is different from the adhesive material of the first adhesive portion (311).

12. The foldable electronic device (101) of any one of claims 1 to 11, further comprising:
a third adhesive portion (331) including an adhesive material, adhered to a third surface (222a) of the second housing (220, 222) and the second area (232), and disposed substantially parallel to the folding axis (Ax); and
a fourth adhesive portion (341) including an adhesive material, adhered to the third surface (222a) of the second housing (220, 222) and the second area (232), and disposed substantially parallel to the third adhesive portion (331).

13. The foldable electronic device (101) of claim 12, wherein the third adhesive portion (331) and the fourth adhesive portion (341) are disposed on a second portion (232a) of the second area (232) adjacent to the folding area (233),
wherein, when the folding area (233) is folded, the second portion (232a) of the second area (232) is configured to face the first portion (231a) of the first area (231) with the gap between the first portion (231a) and the second portion (232a), and
wherein, when the folding area (233) is folded, the fourth adhesive portion (341) together with the third adhesive portion (331) are configured to resist lifting of the second portion (232a) of the second area (232) away from the second surface of the second housing (220, 222).

14. The foldable electronic device (101) of claims 12 or 13, wherein, when the folding area (233) is folded, the third adhesive portion (331) is located corresponding to the first adhesive portion (311) and the fourth adhesive portion (341) is located corresponding to the second adhesive portion (321).

15. The foldable electronic device (101) of any one of claims 12 to 14, wherein the third adhesive portion (331) and the fourth adhesive portion (341) are spaced apart from each other and elongated along the folding axis (Ax),
wherein the third adhesive portion (331) is at least partially disposed between the folding axis (Ax) and the fourth adhesive portion (341), and
wherein a length of the fourth adhesive portion (341) is smaller than a length of the third adhesive portion (331) and greater than a length of the second adhesive portion (321).
